# EUROPEAN PATENT APPLICATION

(11) **EP 4 694 062 A1**
(43) Date of publication of application: **11.02.2026**
(21) Application number: 23929107.3
(22) Date of filing: 27.03.2023
(51) Int. Cl.: H04L 41/16

(54) **METHODS AND DEVICES FOR WIRELESS COMMUNICATION**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); YOU, Xin, Dongguan, Guangdong 523860 (CN)
(74) Representative: Novagraaf Technologies
(86) International application number: PCT/CN2023/083973
(87) International publication number: WO 2024/197505

(57) **Abstract**

Provided are methods and devices for wireless communication. A method comprises: a first device receives first information sent by a second device, the first information being associated with a model monitoring process of a first model. The embodiments of the present application introduce the first information associated with the model monitoring process to a wireless communication scenario, thus helping to solve the model monitoring problem of wireless communication systems.

## Description

### TECHNICAL FIELD

The present disclosure relates to the technical field of communications, and more specifically, to a method and device for wireless communication.

### RELATED ART

In the near future, a large number of models may be introduced into a communication system for implementing different functions. However, no proper solution has been proposed currently for monitoring the models after the models are introduced.

### SUMMARY

Embodiments of the present disclosure provide a method and device for wireless communication. The following describes various aspects involved in the present disclosure.

According to a first aspect of the embodiments of the present disclosure, a method for wireless communication is provided. The method is performed by a first device. The method includes: receiving first information from a second device, wherein the first information is associated with a model monitoring process of a first model.

According to a second aspect of the embodiments of the present disclosure, a method for wireless communication is provided. The method is performed by a second device. The method includes: transmitting first information to a first device, wherein the first information is associated with a model monitoring process of a first model.

According to a third aspect of the embodiments of the present disclosure, a device for wireless communication is provided. The wireless communication device is a first device. The device includes: a first receiving unit, configured to receive first information from a second device, wherein the first information is associated with a model monitoring process of a first model.

According to a fourth aspect of the embodiments of the present disclosure, a device for wireless communication is provided. The wireless communication device is a second device. The device includes: a first transmitting unit, configured to transmit first information to a first device, wherein the first information is associated with a model monitoring process of a first model.

According to a fifth aspect of the embodiments of the present disclosure, a device for wireless communication is provided. The device includes: a transceiver, a memory, and a processor, wherein the memory is configured to store a program, and the processor is configured to invoke the program in the memory and control the transceiver to receive or transmit a signal, such that the device performs some or all of processes in the method in the first aspect or the second aspect.

According to a sixth aspect of the embodiments of the present disclosure, an apparatus is provided. The apparatus includes: a processor configured to invoke a program in a memory, such that the apparatus performs some or all of processes in the method in the first aspect or the second aspect.

According to a seventh aspect of the embodiments of the present disclosure, a chip is provided. The chip includes: a processor configured to invoke a program in a memory, such that an apparatus performs some or all of processes in the method in the first aspect or the second aspect.

According to an eighth aspect of the embodiments of the present disclosure, a computer-readable storage medium is provided. The computer-readable storage medium stores a program. The program causes a device for wireless communication to perform some or all of processes in the method in the first aspect or the second aspect.

According to a ninth aspect of the embodiments of the present disclosure, a computer program product is provided, wherein the computer program product includes a non-transitory computer-readable storage medium that stores a computer program, wherein the computer program can be operated to cause a communication device to perform some or all of processes in the method in the above aspects. In some embodiments, the computer program product may be a software installation package.

According to a tenth aspect of the embodiments of the present disclosuree, a computer program is provided. The computer program causes a device for wireless communication to perform some or all of processes in the method for wireless communication in the first aspect or the second aspect.

In the embodiments of the present disclosure, first information associated with a model monitoring process is introduced in a wireless communication scenario, which helps to address a model monitoring problem in a wireless communication system.

### BRIEF DESCRIPTION OF DRAWINGS

FIG. 1 shows a wireless communication system applied in embodiments of the present disclosure;
FIG. 2 is a schematic flowchart of a method for wireless communication according to some embodiments of the present disclosure;
FIG. 3 is a schematic diagram of a device for wireless communication according to some embodiments of the present disclosure;
FIG. 4 is a schematic diagram of another device for wireless communication according to some embodiments of the present disclosure; and
FIG. 5 is a schematic structural diagram of a communication apparatus according to some embodiments of the present disclosure.

### DETAILED DESCRIPTION

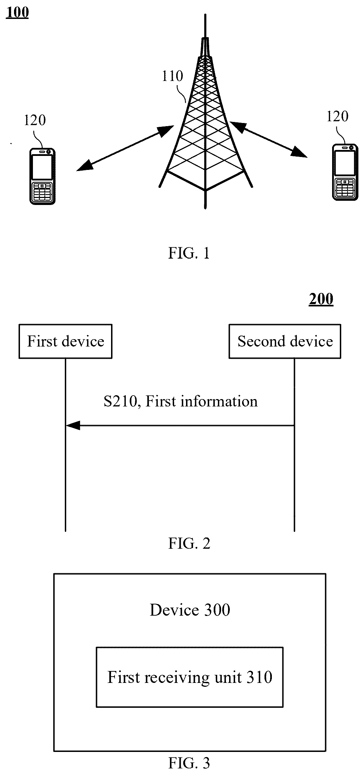

The following describes the technical solutions according to the present disclosure with reference to the accompanying drawings. For ease of understanding, with reference to FIG. 1, the following first describes a communication system applicable to the embodiments of the present disclosure, as well as involved terms and communication processes.

FIG. 1 shows a wireless communication system 100 applied in some embodiments of the present disclosure. The wireless communication system 100 may include a network device 110 and a terminal device 120. The network device 110 may be a device capable of communicating with the terminal device 120. The network device 110 is capable of providing communication coverage for a specific geographical region and communicating with the terminal device 120 within the communication coverage.

FIG. 1 shows one network device and two terminals. In some embodiments, the wireless communication system 100 may include a plurality of network devices, and each of the network devices may cover a quantity of terminal devices, which is not limited in the embodiments of the present disclosure.

In some embodiments, the wireless communication system 100 further includes other network entities such as a network controller and a mobility management entity, which is not limited in the embodiments of the present disclosure.

It should be understood that the technical solutions according to the embodiments of the present disclosure may be applied to various communication systems, such as a 5^{th} Generation (5G) system or a new radio (NR) system, a long-term evolution (LTE) system, an LTE frequency-division duplex (FDD) system, and an LTE time-division duplex (TDD) system. The technical solutions according to the present disclosure may also be applied to future communication systems, such as a 6^{th} Generation (6G) mobile communication system or a satellite communication system.

The terminal device in the embodiments of the present disclosure may also be referred to as a user equipment (UE), an access terminal, a subscriber unit, a user station, a mobile site, a mobile station (MS), a mobile terminal (MT), a distant station, a remote terminal, a mobile device, a user terminal, a terminal, a wireless communication device, a user agent, or a user apparatus. The terminal device in the embodiments of the present disclosure may be a device that provides voice and/or data connectivity to a user, and may be configured to connect a person, an object, and a machine, for example, a handheld or vehicle-mounted device with a wireless connection function. The terminal device in the embodiments of the present disclosure may be a mobile phone, a pad, a laptop computer, a palmtop computer, a mobile Internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, or the like. In some embodiments, the UE may act as a base station. For example, the UE may act as a scheduling entity that provides a sidelink signal between UEs in vehicle-to-everything (V2X) communications or device-to-device (D2D) communications. For example, a cellular phone communicates with a vehicle communicate over a sidelink signal. A cellular phone communicates with a smart home device without relaying a communication signal via a base station.

The network device in the embodiments of the present disclosure may be a device configured to communicate with the terminal device. The network device may also be referred to as an access network device or a radio access network (RAN) device. For example, the network device may be a base station. The network device in the embodiments of the present disclosure may be a RAN node (or device) that connects the terminal device to a wireless network, a core network device, a model monitoring and management device, an operation administration and maintenance (OAM) device, or the like. The term "base station" may be broadly understood as covering or being used interchangeably with various names such as a NodeB, an evolved NodeB (eNB), a next generation NodeB (gNB), a relay station, an access point (AP), a transmission and reception point (TRP), a transmission point (TP), a master eNB (MeNB), a secondary eNB (SeNB), a multi-standard radio (MSR) node, a home eNB (HeNB) a network controller, an access node, a wireless node, a transmission node, a transceiver node, a baseband unit (BBU), a remote radio unit (RRU), an active antenna unit (AAU), a remote radio head (RRH), a central unit (CU), a distributed unit (DU), a centralized unit-control plane (CU-CP), a centralized unit-user plane (CU-UP), and a positioning node. The core network device may broadly cover or substitute for various names, such as a location management function (LMF) network element, a network slice selection function (NSSF), an authentication server function (AUSF), a unified data management (UDM), an access and mobility management function (AMF), a session management function (SMF), a policy control function (PCF), a user plane function (UPF), a sensing function (SF), and a network data analytics function (NWDAF) network element.

The base station may be a macro base station, a micro base station, a relay node, a donor node, or the like, or a combination thereof. The base station may alternatively be a communication module, a modem, or a chip that is configured in the device or apparatus. The base station may alternatively be a mobile switching center, a device functioning as a base station in D2D, V2X, or machine-to-machine (M2M) communications, a network device in a 6G network, a device as a base station in a future communication system, or the like. The base station supports networks employing the same access technology or different access technologies. A specific technology and a specific device form that are adopted for the network device are not limited in the embodiments of the present disclosure. The base station may be stationary or mobile. For example, a helicopter or an unmanned aerial vehicle (UAV) may act as a mobile base station. At least one cell may move based on a location of the mobile base station. In another example, the helicopter or the UAV may be configured as a device that communicates with another base station.

The base station may be stationary or mobile. For example, a helicopter or a UAV may act as a mobile base station. At least one cell can move based on a location of the mobile base station. In another example, the helicopter or the UAV may be configured as a device that communicates with another base station.

In some deployments, the network device in the embodiments of the present disclosure may be a CU or a DU, or the network device may include a CU and a DU. The gNB may further include an AAU.

The network device and the terminal device may be deployed on land, including an indoor or outdoor device, a handheld device, or a vehicle-mounted device; may be deployed on water; or may be deployed on an aircraft, a balloon, or a satellite in the air. Scenarios in which the network device and the terminal device are located are not limited in the embodiments of the present disclosure.

It should be understood that all or part of functions of a communication device in the present disclosure may also be implemented via software functions running on hardware, or via virtualization functions instantiated on a platform (such as a cloud platform).

### Beam management

In a low-frequency communication system, a terminal device typically uses an omnidirectional antenna to receive a signal. As an operating frequency of the communication system increases, a path loss of the signal during transmission increases, thereby affecting system coverage capabilities. Therefore, the concept of "beam" is introduced into the high-frequency communication system (for example, an NR system). In this way, the terminal device may communicate with a network device over a beam in a specific direction, such that a propagation loss is addressed and coverage of the communication system is ensured.

Due to mobility of most terminal devices, in order to enable the network device to adjust a receive beam timely based on a latest location of the terminal device to achieve better communication quality, a beam management function is introduced into the high-frequency communication system. Prior to communication between the network device and a terminal, the network device and the terminal may select proper transmit and receive beams by a beam management process.

For example, in the beam management process, the network device may configure at least one measurement reference signal (for example, a channel state information reference signal (CSI-RS)) for the terminal device. Correspondingly, the terminal device may measure, based on a predetermined rule, a measurement reference signal configured by the network device, and report a measurement result of at least one beam. In this way, the network device may select a proper receive beam for the terminal device based on the beam measurement result reported by the terminal device, thereby achieving beam management.

In the above beam management process, the network device or the terminal device usually needs to traverse all beams to measure a reference signal. Therefore, it needs to take a long time and a large number of resources to select a proper beam. As a quantity of beams increases in the future, more time and resources may be needed. In order to address this problem, beam management based on an artificial intelligence (AI) model or a machine learning (ML) model has been proposed in R18. The AI model may be trained based on beam measurement results of some beam groups, such that the AI model is capable of predicting available beams from these beam groups.

With the development of science and technology, in the near future, a large number of models (for example, AI/ML models) for different functions may be introduced into the communication system, for example, a large number of AI/ML models for the beam management are introduced into the above-mentioned beam management process. However, no proper solution has been proposed currently for monitoring these models after these models are introduced.

For example, in a case where a plurality of deployed models run simultaneously, a model monitoring result of a model is likely to be affected by other running models. In this case, the model monitoring result cannot truly reflect performance of the model, causing a decision-maker (such as the network device) to make an incorrect decision. As an example, based on the affected model monitoring result, the network device may deactivate a model that runs well.

In order to address the above problem, the embodiments of the present disclosure introduce first information associated with a model monitoring process in a wireless communication scenario, which helps to address a model monitoring problem in a wireless communication system.

With reference to FIG. 2, the following describes a method for wireless communication according to some embodiments of the present disclosure. The method 200 illustrated in FIG. 2 is described from a perspective of interaction between a first device and a second device. The first device and the second device may be any type of network devices and terminal devices mentioned above. For example, the first device is a first terminal device, and the second device may be a network device or a second terminal device. For another example, the first device is a first network device, and the second device may be a terminal device or a second network device. The network device may be an access network device, a core network device, a model monitoring and management device, or an OAM device.

It should be noted that in the embodiments of the present disclosure, meanings of model monitoring, model performance monitoring, and performance monitoring may be equivalent and used interchangeably. For ease of description, the following uniformly uses the model monitoring for description.

Referring to FIG. 2, in process S210, the first device receives first information from the second device. Alternatively, the second device transmits first information to the first device.

The first information may be associated with a model monitoring process of a first model. For example, the first information may be configuration information associated with the model monitoring process of the first model. Based on the first information, at least one of the first device or the second device may perform the model monitoring on the first model. The first model may be an above-mentioned AI/ML model, such as a beam management model, a CSI channel compression feedback model, or a positioning model. The first model may also be another type of models introduced in a future communication system.

The method for wireless communication according to the embodiments of the present disclosure may be applied to a plurality of scenarios. For example, the method may be applied to a scenario where the second device triggers the model monitoring for a model running on the first device or a model running both on the first device and the second device. In some cases, a model monitoring process may require cooperation between two devices. As an example, for model monitoring on the beam management model deployed on the terminal device, cooperation between the terminal device and the network device may be required to complete the model monitoring process. The method according to the embodiments of the present disclosure may also be applied to a scenario where the second device triggers the model monitoring for a model running on the second device, but a model monitoring process requires cooperation from the first device. In other cases, for details about the model monitoring on a model deployed on a third device, reference may be made to a model monitoring result of a same model, a similar model, or another model that is deployed on the first device, or a measurement result captured by the first device. Therefore, the method according to the embodiments of the present disclosure may also be applied to a scenario where the second device triggers the model monitoring for the model running on the third device, but a model monitoring process requires the cooperation from the first device.

As described above, the method according to the embodiments of the present disclosure may implement the model monitoring in a scenario where a plurality of models coexist. As an implementation, the method may perform the model monitoring on one model. As another implementation, the method may perform the model monitoring on a plurality of models.

Usually, the model monitoring may include aperiodic model monitoring, semi-periodic model monitoring, and periodic model monitoring. In the embodiments of the present disclosure, the first information may be used to perform the aperiodic model monitoring, the semi-periodic model monitoring, or the periodic model monitoring on the first model.

By using an example where the first information is the configuration information associated with the model monitoring process of the first model, the following describes in detail the first information and a method for performing the model monitoring based on the first information.

In the embodiments of the present disclosure, the first information may include at least one of: second information, wherein the second information is used to determine the first model; third information, wherein the third information is constraint information associated with the model monitoring process of the first model; fourth information, wherein the fourth information is reference signal configuration information associated with the model monitoring process of the first model; fifth information, wherein the fifth information is association information of a second model, the second model being related to the model monitoring process of the first model; sixth information, wherein the sixth information is reporting configuration information associated with the model monitoring process of the first model; seventh information, wherein the seventh information is used to indicate whether to activate a model monitoring task of the first model; or eighth information, wherein the eighth information is association information of a third model, the third model being not related to the model monitoring process of the first model. The following describes in detail the second information to the eighth information with reference to specific examples.

### Second information

As an implementation, the first information may include the second information used to determine the first model. The first model is a target model for which the model monitoring is to be performed. For example, the second information may include model identity information associated with the first model, such as model identifier (ID) information. In a case where the model monitoring is performed on one model or a parameter associated with a model monitoring process of one model is configured, the second information may include model identity information associated with the one model. In a case where the model monitoring is performed on a plurality of models or parameters associated with model monitoring processes of a plurality of models are configured, the second information may include model identity information associated with the plurality of models. Correspondingly, the first model may include at least one to-be-monitored model.

A quantity of first models may be flexibly controlled, such that the method for wireless communication according to the embodiments of the present disclosure performs the model monitoring on at least one model at the same time, which helps to improve efficiency of the model monitoring.

In practice, models associated with a same model ID may be respectively deployed on the first device and the second device. Therefore, the first model may not be determined based on only a model ID associated with a model.

For example, models associated with a model ID 1 are respectively deployed on the first device and the second device. In a case where the second device only provides the model ID 1 to the first device, the first device fails to determine whether the second device is ready to monitor a model that is associated with the model ID 1 and deployed on the first device (in this case, the first device is a monitoring subject) or a model that is associated with the model ID 1 and deployed on the second device (in this case, the second device is a monitoring subject but requires the first device to cooperate with a monitoring task). That is, the model ID 1 corresponds to two models, wherein one model is deployed on the first device and the other model is deployed on the second device. Therefore, based on only the model ID 1, it is impossible to determine whether the to-be-monitored first model is the model associated with the model ID 1 on the first device or the model associated with the model ID 1 on the second device.

In order to prevent the first device from misunderstanding a model deployment location of the first model, the second information may also include the model deployment location of the first model. For example, in a case where the models associated with the model ID 1 are respectively deployed on the network device and the terminal device, the model deployment location of the first model can be indicated by a device type. In a case where the models associated with the model ID 1 are deployed on the network device or on the terminal device, the model deployment location of the first model can be indicated by device identity information.

The model deployment location of the first model may be indicated in a plurality of manners. For example, the model deployment location of the first model may be indicated implicitly, for example, the model deployment location of the first model is indicated by locations of different information fields. For another example, the model deployment location of the first model may be indicated explicitly, for example, the model deployment location of the first model is indicated by different values of a flag bit or threshold information. The following describes a manner of indicating the model deployment location of the first model with specific examples.

In the case where the model deployment location of the first model is indicated by the locations of the different information fields, the second information may be composed of two information fields (hereinafter referred to as an information field 1 and an information field 2). A model ID associated with the first model and provided by the information field 1 can indicate that the first model is deployed on the first device, while a model ID associated with the first model and provided by the information field 2 may indicate that the first model is deployed on the second device. In some embodiments, the second information may also include another information field, and a model ID associated with the first model and provided by the another information field can indicate that the first model is deployed on another device. The another information field is a general term different form the information field 1 and the information field 2. In practice, the another information field may also include at least one information field. A model ID provided by each information field in the another information field may also indicate one model deployment location of the first model. In this way, locations of the model ID in a plurality of information fields can implicitly indicate corresponding model deployment locations of the first model. In some embodiments, model deployment location information associated with each information field can be provided in field description information of the information field. It should be noted that a quantity of information fields can be determined based on actual usage, which is not limited in the embodiments of the present disclosure.

In a case where the model deployment location of the first model is indicated by the flag bit, the second information may be associated with one piece of flag bit information, wherein different values of the flag bit indicate different model deployment locations. For example, the one piece of flag bit information may take a value of '1' or '0'. In the case where the one piece of flag bit information takes the value of '1', the one piece of flag bit information can indicate a model not deployed on the first device or a model deployed on the second device. In the case where the one piece of flag bit information takes the value of '0', the one piece of flag bit information indicates a model not deployed on the second device or a model deployed on the first device. Meanings of the above-mentioned values '1 'and '0' may be opposite, and may be set based on usage needs in practice, which is not limited in the present disclosure.

The model deployment location of the first model includes a plurality of possible situations. The model deployment location may be indicated by the different values of the threshold information. For example, the model ID associated with the first model may be associated with one piece of threshold information, wherein different values of the one piece of threshold information each may correspond to one model deployment location. As an example, a value range of the threshold information may be 0 to 10 (which are represented by 4 bits). All values can respectively correspond to following deployment locations: model deployment on the terminal device, model deployment on the network device, model deployment on an information transmitter, model deployment on an information receiver, model deployment on a core network device, model deployment on an access network device, model deployment on an AI/ML management entity, model deployment on OAM, model deployment on both the terminal device and the network device, model deployment on both the information transmitter and the information receiver, and model deployment on an entire system. It should be noted that the value range of threshold information can be determined based on a quantity of deployment locations. The above content is only given as an example, and the present disclosure does not limit the value range of threshold information and the corresponding deployment locations.

### Third information

As an implementation, the first information may include the third information, wherein the third information may be the constraint information associated with the model monitoring process of the first model. Constraints such as a time domain resource and a model monitoring and evaluation requirement in the model monitoring process of the first model can be determined based on the third information. For example, the third information may include at least one of: ninth information, wherein the ninth information is used to indicate a resource configuration associated with the model monitoring process of the first model; tenth information, wherein the tenth information is used to indicate one of a duration corresponding to a single model monitoring and evaluation process of the first model, a minimum duration corresponding to the single model monitoring and evaluation process of the first model, or a duration proportion corresponding to the single model monitoring and evaluation process of the first model; eleventh information, wherein the eleventh information is used to indicate a quantity of evaluations of the model monitoring task of the first model or a minimum quantity of evaluations of the model monitoring task of the first model; twelfth information, wherein the twelfth information is used to indicate a time interval between any two adjacent model monitoring and evaluation processes of the first model or a minimum time interval between any two adjacent model monitoring and evaluation processes of the first model; thirteenth information, wherein the thirteenth information is used to indicate one of a duration corresponding to the model monitoring task of the first model, a minimum duration corresponding to the model monitoring task of the first model, or a duration proportion corresponding to the model monitoring task of the first model; or fourteenth information, wherein the fourteenth information is used to indicate relevant information of a model monitoring enable event of the first model. The following describes in detail the ninth information to the fourteenth information with reference to specific examples.

The ninth information may indicate the resource configuration associated with the model monitoring process of first model. As an example, the ninth information may include at least one of: a time domain resource configuration, a frequency domain resource configuration, a spatial domain resource configuration, or a code domain resource configuration.

The model monitoring process of the first model may usually include at least one model monitoring task, wherein each of the at least one model monitoring task may include at least one model monitoring and evaluation process. The third information may include time information associated with the single model monitoring and evaluation process. For example, the third information may include the tenth information, wherein the tenth information may indicate the duration corresponding to the single model monitoring and evaluation process of first model. In order to ensure reliability of a model monitoring result of the first model and minimize a system resource consumption, the tenth information may indicate information of the minimum duration corresponding to the single model monitoring and evaluation process of the first model. In order to save an indication resource, the tenth information may indicate, over duration proportion information, the time information corresponding to the single model monitoring and evaluation process, such as information of the duration and the information of the minimum duration. The duration proportion information may be a ratio of time of the single model monitoring and evaluation process (such as the information of the duration and the minimum duration that are mentioned above) to time occupied by a single model monitoring task (the time occupied by the single model monitoring task is shared by at least one model monitoring task).

In the model monitoring process, in a case where the quantity of evaluations is too less, an evaluation result is easily affected by a transient factor, thereby affecting accuracy of the model monitoring result. Therefore, the third information may include the eleventh information, wherein the eleventh information may indicate the quantity of evaluations of the model monitoring task of the first model or the minimum quantity of evaluations of the model monitoring task of the first model. Usually, the model monitoring is performed based on the quantity of evaluations of the model monitoring task, such that a highly accurate model monitoring result can be acquired. However, in some cases, the model monitoring can be performed based on the minimum quantity of evaluations, such that an accurate model monitoring result can be acquired in a case where a condition such as a resource or monitoring time is limited.

In a case where a plurality of evaluation processes are conducted in close temporal proximity, or in a case where a plurality of evaluation processes in one model monitoring task are concentrated in a time period, results of the plurality of evaluations may be difficult to represent performance of the model in the one model monitoring task. Therefore, the third information may include the twelfth information, wherein the twelfth information may indicate the time interval between the any two adjacent model monitoring and evaluation processes of the first model. In a case of a resource limitation or a resource conflict, the twelfth information may indicate the minimum time interval between the any two adjacent model monitoring and evaluation processes of the first model.

The third information may include the thirteenth information, wherein the thirteenth information may indicate the duration corresponding to the model monitoring task of the first model. In order to balance the accuracy of the model monitoring result and a quantity of monitoring resources, the thirteenth information may indicate the minimum duration corresponding to the model monitoring task of the first model. In addition, the thirteenth information may indicate the duration proportion corresponding to the model monitoring task of the first model. For example, the duration proportion may be a ratio of total time required by a model monitoring process associated with a single model (such as the information of the duration and the minimum duration that are mentioned above) to time occupied by all model monitoring processes (the time occupied by all the model monitoring processes is shared by a model monitoring process associated with at least one model).

Usually, the model monitoring task does not need to be continuously enabled. As an implementation, the model monitoring task may be triggered by the model monitoring enable event. Therefore, the third information may include the fourteenth information, wherein the fourteenth information may indicate the relevant information of the model monitoring enable event of the first model. For example, the fourteenth information may include identity information of the model monitoring enable event, wherein the identity information indicates the model monitoring enable event. For another example, the fourteenth information may include parameter information associated with the model monitoring enable event.

The identity information of the model monitoring enable event may be implemented in a plurality of manners.

For example, the model monitoring enable event can be explicitly determined based on an ID associated with the model monitoring enable event. In a case where four model monitoring enable events are defined, the model monitoring enable events can be indicated by two bits, wherein different values of the two bits can be one-to-one corresponding to the model monitoring enable events.

For another example, the model monitoring enable event is implicitly determined based on a location of the parameter information associated with the model monitoring enable event. For example, different locations of the parameter information associated with the model monitoring enable event are associated with different model monitoring enable events. That is, presence of the parameter information in a location indicates that a model monitoring enable event associated with the location is being used. On the contrary, parameter information corresponding to a location being not present indicates that a model monitoring enable event associated with the location is not being used. This manner will be further described hereinafter with reference to the parameter information associated with the model monitoring enable event, and details are not described herein any further.

For another example, the model monitoring enable event is implicitly determined based on a choice function. As an example, a definition of each branch of the choice function can be associated with one model monitoring enable event. The choice function pointing to a definition of a branch indicates that a model monitoring enable event associated with the branch is being used.

In order to meet different usage needs of the model, the model monitoring enable event may include at least one of periodically-triggered enable event or an event-triggered enable event.

With respect to the periodically-triggered enable event, the parameter information associated with the model monitoring enable event may include an enabling period of the model monitoring task, which means that the model monitoring task can be enabled once every other enabling period of the model monitoring task.

The event-triggered enable event may be associated with a plurality of types of information. For example, the event-triggered enable event may be associated with current communication quality, that is, in a case where the current communication quality is poor, the model monitoring task can be triggered. Because the plurality of types of information all can reflect the current communication quality, the event-triggered enable event may be associated with at least one of: a bit error rate of data transmission, a packet delay of data transmission, a throughput of data transmission, or signal quality of a current serving cell of the first device. Considering that in some cases, for example, in a case where the first device may cares about signal quality of a neighbor cell during moving, the event-triggered enable event may be associated with signal quality of at least one neighbor cell of the current serving cell of the first device. In addition, in some configurations, the system cares more about running of models deployed in some devices. Therefore, the event-triggered enable event may be associated with signal quality of at least one cell in a predetermined configuration.

With respect to the event-triggered enable event, the parameter information associated with the model monitoring enable event may include a threshold corresponding to information associated with the event-triggered enable event. That is, in a case where the information associated with the event-triggered enable event meets the corresponding threshold, the model monitoring task can be triggered.

For example, in a case where the event-triggered enable event is associated with the bit error rate of the data transmission, the parameter information associated with the event-triggered enable event is a first threshold. That is, in a case where the bit error rate of the data transmission is greater than or equal to the first threshold, the model monitoring task can be triggered. The bit error rate mentioned herein may be a bit error rate corresponding to all data or all user data that is received by the first device in a past period of time. The bit error rate may be an overall bit error rate or an average bit error rate of the data transmission.

In a case where the event-triggered enable event is associated with the packet delay of the data transmission, the parameter information associated with the event-triggered enable event is a second threshold. That is, in a case where the packet delay of the data transmission is greater than or equal to the second threshold, the model monitoring task can be triggered. The packet delay mentioned herein may be an average packet delay corresponding to all the data or all the user data that is received by the first device in the past period of time.

In a case where the event-triggered enable event is associated with the throughput of the data transmission, the parameter information associated with the event-triggered enable event is a third threshold. That is, in a case where the throughput of the data transmission is less than or equal to the third threshold, the model monitoring task can be triggered. The throughput mentioned herein may be one of a data throughput corresponding to all the data or all the user data that is received by the first device in the past period of time or an average throughput corresponding to all the data or all the user data that is received by the first device in the past period of time.

In a case where the event-triggered enable event is associated with the signal quality of the current serving cell, the parameter information associated with the event-triggered enable event is a fourth threshold. That is, in a case where the signal quality of the current serving cell of the first device is less than or equal to the fourth threshold, the model monitoring task can be triggered.

In a case where the event-triggered enable event is associated with the signal quality of the at least one neighbor cell of the current serving cell of the first device, the parameter information associated with the event-triggered enable event is a fifth threshold. That is, in a case where the signal quality of the at least one neighbor cell of the current serving cell of the first device is greater than or equal to the fifth threshold, the model monitoring task can be triggered.

In a case where the event-triggered enable event is associated with the signal quality of the at least one cell in the predetermined configuration, the parameter information associated with the event-triggered enable event is a sixth threshold. That is, in a case where the signal quality of the at least one cell in the predetermined configuration of the first device is greater than or equal to the sixth threshold, the model monitoring task can be triggered.

The signal quality of the current serving cell of the first device, the signal quality of the at least one neighbor cell of the current serving cell of the first device, and the signal quality of the at least one cell in the predetermined configuration of the first device may be at least one of parameters such as a reference signal received power (RSRP), reference signal received quality (RSRQ), and a signal interference noise ratio (SINR). The signal quality of the current serving cell of the first device, the signal quality of the at least one neighbor cell of the current serving cell of the first device, and the signal quality of the at least one cell in the predetermined configuration of the first device may be indicated by a same parameter or by different parameters, which is not limited in the present disclosure.

As mentioned above, the model monitoring enable event can be implicitly determined based on the location of the parameter information associated with the model monitoring enable event. For example, a parameter associated with any one of the above model monitoring enable events is one-to-one corresponding to a location of the parameter. In a case where a parameter is configured in a location, the model monitoring enable event is an event corresponding to the parameter. For example, the model monitoring enable event is associated with the bit error rate of the data transmission. In a case where the first threshold is present in a first position, the model monitoring enable event is that the bit error rate of the data transmission is greater than or equal to the first threshold. The first location is corresponding to the first threshold, and this mapping relationship can be pre-defined.

It should be noted that the model monitoring enable event can be pre-defined by a protocol. The third information can be configured by any one of pre-configuration, pre-definition, a system broadcast message, or dedicated signaling. In a case where the third information includes a plurality of types of information, the plurality of types of information may be configured in a same manner or in different manners, which is not limited in the present disclosure.

### Fourth information

Generally, in the model monitoring process, a reference signal receiver can acquire some measurement results based on a received reference signal associated with the model monitoring process of the first model, such as the RSRP, the RSRQ, the SINR, a delay difference, a frequency offset, a Doppler frequency offset, an ID of a strongest beam, IDs of n strongest beams, and a channel impulse response. Based on the above measurement results, running performance of the first model can be determined, that is, the model monitoring result of the first model or an intermediate result that can reflect the model monitoring result. Therefore, the first information may include the fourth information, wherein the fourth information may be the reference signal configuration information associated with the model monitoring process of the first model.

The reference signal associated with the model monitoring process of the first model may be transmitted by the second device and received by the first device, or may be transmitted by the first device and received by the second device. Therefore, the fourth information may include at least one of reference signal configuration information corresponding to the reference signal received by the first device or reference signal configuration information corresponding to the reference signal transmitted by the first device. In order to improve configuration flexibility of the second device, the fourth information may also include indication information on whether to activate a reference signal configuration associated with the model monitoring process of the first model. In some embodiments, whether to activate the reference signal configuration corresponding to the reference signal received by the first device and whether to activate the reference signal configuration corresponding to the reference signal transmitted by the first device may be separately indicated (for example, may be respectively indicated by two bits, wherein the reference signal configuration corresponding to the reference signal received by the first device is indicated by one bit, and the reference signal configuration corresponding to the reference signal transmitted by the first device is indicated by the other bit), or may be uniformly indicated (for example, may be indicated by one bit, wherein the reference signal configuration corresponding to the reference signal received by the first device and the reference signal configuration corresponding to the reference signal transmitted by the first device are activated or deactivated simultaneously), which is not limited in the present disclosure.

The reference signal configuration information may include at least one of: a frequency domain resource configuration of the reference signal, a time domain resource configuration of the reference signal, a spatial domain resource configuration of the reference signal, or a code domain resource configuration of the reference signal. The reference signal configuration information mentioned herein may be the reference signal configuration information corresponding to the reference signal transmitted by the first device, or may be the reference signal configuration information corresponding to the reference signal received by the first device.

In a case where the fourth information includes both the reference signal configuration information corresponding to the reference signal received by the first device (hereinafter referred to as information A) and the reference signal configuration information corresponding to the reference signal transmitted by the first device (hereinafter referred to as information B), the information A and the information B can be indicated in a plurality of manners. For example, a parameter can be separately defined for the information A and the information B. As an example, the parameter for the information A and the parameter for the information B can be configured, which respectively correspond to an information field 3 and an information field 4. That is, all information included in the information field 3 may be the reference signal configuration information associated with the reference signal passively received by the first device, and all information included in the information field 4 may be the reference signal configuration information associated with the reference signal actively transmitted by the first device. For another example, an indication bit may be associated with reference signal configuration information corresponding to each set of reference signal, and a value of the indication bit may correspond to the information A or the information B. As an example, in a case where the indication bit takes a value of '0,' the reference signal configuration information is the information A. In a case where the indication bit takes a value of '1,' the reference signal configuration information is the information B. A mapping relationship between the reference signal configuration information and a specific value of the indication bit is not limited in the present disclosure.

### Fifth information

As mentioned above, running of some models may significantly affect model monitoring processes of other models. For example, both a beam prediction model and the CSI channel compression and feedback model have an indirect impact on a user throughput from a macro perspective. In a case where one model performs poorly, the model monitoring performed on another model may have an effect on a model monitoring result of the another model. In a case where the effect is severe, based on the interfered model monitoring result, a decision-making device may make am incorrect decision, for example, switch or deactivate a model with good performance.

Therefore, the first information may include the fifth information, wherein the fifth information may indicate the association information of the second model, the second model being related to the model monitoring process of the first model. That is, in the model monitoring process of the first model, the second model may affect or significantly affect the model monitoring result of the first model.

For example, the fifth information may include a model ID of the second model. The model monitoring process of the first model may be affected by at least one model, or one model may affect a model monitoring process of at least one model. Therefore, a one-to-one, one-to-many, many-to-one, or many-to-many association relationship may be present between the first model and the second model. That is, a model ID associated with one to-be-monitored target model (such as the first model) may be a model ID of at least one second model (that is, the fifth information may include the model ID of the at least one second model), and/or a model ID associated with a plurality of to-be-monitored target models may be the model ID of the at least one second model.

In order to prevent the second model from affecting the model monitoring process of the first model, running of the second model can be processed in the model monitoring process of the first model. For example, within a model monitoring duration of the first model or within a time resource of the model monitoring of the first model, the second model may be suspended from running or use, or the second model may be used in a first mode. Beyond the model monitoring duration of the first model, the second model may be used in a second mode. The first mode is different from the second mode. The second mode may be a mode of normally using the second model, and the first mode may be a mode that consumes less resources than the second mode. For example, the resource is at least one of a storage resource, a computing resource, or a battery capacity. The first mode can also be referred to as a predetermined mode or a mode used based on a predetermined rule, wherein the predetermined mode or the predetermined rule can be pre-defined by a protocol.

In a case where the fifth information is defined in a protocol, in practice, a processing manner for another running model can be determined based on whether the fifth information is configured. For example, in a case where the fifth information is unconfigured, the another running model is related to the model monitoring process of the first model, that is, the another running model is the second model; or the another running model is not related to the model monitoring process of the first model. Correspondingly, in a case where the fifth information is unconfigured, the another running model (i.e., the second model) needs to be suspended from use or be used in the first mode; or the another running model does not need to be suspended from use, or the another running model is used in the second mode.

In a case where the fifth information is not defined in the protocol, in the model monitoring process of the first model, the processing manner for the another running model may include any one of following manners: the model monitoring process of the first model is not affected by the another running model, that is, within the model monitoring period of the first model, the another running model does not need to be suspended from running or use or be used in the first mode; or the model monitoring process of the first model may be affected by any other running model, that is, within the model monitoring period of the first model, the another running model needs to be suspended from running or use or be used in the first mode.

In some embodiments, in either of the above two scenarios (a first scenario where the fifth information is defined by the protocol but unconfigured; and a second scenario where the fifth information is not defined in the protocol), the processing manner for the another running model can be pre-defined by a protocol.

As described above, a same model ID may correspond to more than one model, and a same model may be deployed on different devices. Therefore, the fifth information may include a model deployment location of the second model. The model deployment location of the second model can be indicated by any one of the above-mentioned implementations of the model deployment location of the first model, which is not elaborated herein for brevity. It should be noted that the implementations of the model deployment location of the first model and the model deployment location of the second model may be the same or different, which is not limited in the present disclosure.

Based on model deployment location information of the second model, the first device and/or the second device can be assisted in determining that a relevant model deployed in which location needs to cooperate with the model monitoring process of the first model, so as to avoid mistakenly suspending running of some models. As an example, a model related to the model monitoring process of the first model includes a model A (i.e., the second model is the model A), and the model A is deployed on both the first device and the second device. In a case where the model deployment location information of the second model indicates the first device, the model A deployed on the first device needs to cooperate with the model monitoring process of the first model, for example, the model A deployed on the first device is suspended from use or used in the first mode. As another example, a model related to the model monitoring process of the first model includes a model A and a model B, and the model A is deployed on both the first device and the second device. Firstly, based on the model deployment location of the first model, it can be determined that a device on which the model B is deployed does not participate in the model monitoring process of the first model. Therefore, the model B does not need to cooperate with the model monitoring process of the first model. Secondly, based on the model deployment location information of the second model, the first device can determine that in the model monitoring process of the first model, the model A deployed on the first device needs to be suspended from use or used in the first mode, or the model A deployed on the second device needs to be suspended from use or used in the first mode, or both the model A deployed on the first device and the model A deployed on the second device need to be suspended from use or used in the first mode.

In some cases, the second model associated with the model monitoring process of the first model does not always significantly affect or affect the model monitoring process of the first model, that is, the second model significantly affects or affects the model monitoring process of the first model only under a condition. Therefore, whether the second model participates in the model monitoring process of the first model can be determined based on whether the second model significantly affects the model monitoring process of the first model. For example, in a case where the second model significantly affects or affects the model monitoring process of the first model under a first condition, the second model may participate in the model monitoring process of the first model in a case where the first condition is satisfied, for example, the second model can be suspended from use or used in the first mode in the model monitoring process of the first model. In a case where the second model does not significantly affect or affect the model monitoring process of the first model under a second condition, the second model may not participate in the model monitoring process of the first model in a case where the second condition is satisfied, for example, the second model can be used in the second mode. The above manner can reduce an impact of the model monitoring process on running and use efficiency of the second model to a certain extent, and make the model monitoring more flexible and effective.

Based on this, the fifth information may include the first condition under which the second model participates in the model monitoring process of first model, and/or the second condition under which the second model does not participate in the model monitoring process of the first condition.

As an implementation, the first condition or the second condition may be associated with at least one of: the bit error rate of the data transmission, the packet delay of the data transmission, the throughput of the data transmission, the signal quality of the current serving cell of the first device, the signal quality of the at least one neighbor cell of the current serving cell of the first device, the signal quality of the at least one cell in the predetermined configuration; a remaining resource of the first device; whether a configuration with which the second model is currently running bel ongs to a first configuration; or whether a scenario where the second model is currently running belongs to a first scenario. Information associated with the first condition may be the same as or different from that associated with the second condition.

For example, in a case where the first condition or the second condition is associated with the bit error rate of the data transmission, the first condition may be that the bit error rate corresponding to all data or all user data that is received by the first device in the past period of time is greater than or equal to a seventh threshold; and the second condition may be that the bit error rate corresponding to all data or all user data that is received by the first device in the past period of time is less than or equal to an eighth threshold. The bit error rate may be the overall bit error rate of the data transmission or the average bit error rate of the data transmission.

In a case where the first condition or the second condition is associated with the packet delay of the data transmission, the first condition may be that the average packet delay corresponding to all data or all user data that is received by the first device in the past period of time is greater than or equal to a ninth threshold; and the second condition may be that the average packet delay corresponding to all data or all user data that is received by the first device in the past period of time is less than or equal to a tenth threshold.

In a case where the first condition or the second condition is associated with the throughput of the data transmission, the first condition may be that the data throughput or the average throughput that corresponds to all data or all user data that is received by the first device in the past period of time is less than or equal to an eleventh threshold; and the second condition may be that the data throughput or the average throughput that corresponds to all data or all user data that is received by the first device in the past period of time is greater than or equal to a twelfth threshold.

In a case where the first condition or the second condition is associated with the signal quality of the current serving cell of the first device, the first condition may be that the signal quality of the current serving cell of the first device is less than or equal to a thirteenth threshold; and the second condition may be that the signal quality of the current serving cell of the first device is greater than or equal to a fourteenth threshold.

In a case where the first condition or the second condition is associated with the signal quality of the at least one neighbor cell of the current serving cell of the first device, the first condition may be that the signal quality of the at least one neighbor cell of the current serving cell of the first device is greater than or equal to a fifteenth threshold; and the second condition may be that the signal quality of the at least one neighbor cell of the current serving cell of the first device is less than or equal to a sixteenth threshold.

In a case where the first condition or the second condition is associated with the signal quality of the at least one cell in the predetermined condition, the first condition may be that the signal quality of the at least one cell in the predetermined condition is greater than or equal to a seventeenth threshold; and the second condition may be that the signal quality of the at least one cell in the predetermined configuration is less than or equal to an eighteenth threshold.

In a case where the first condition or the second condition is associated with the remaining resource of the first device, the first condition may be that the remaining resource of the first device is less than or equal to a nineteenth threshold; and the second condition may be that the remaining resource of the first device is greater than or equal to a twentieth threshold. For example, the remaining resource of the first device may be at least one of: a remaining memory and/or a remaining running memory of the first device, a remaining battery capacity of the first device, or one of a remaining computing resource of the first device or a remaining processing power resource of the first device. In a case where the remaining resource of the first device includes different information, a threshold corresponding to the first condition or the second condition can be determined based on content of the remaining resource. In a case where the first condition or the second condition is associated with the remaining memory and/or the remaining running memory of the first device, the first condition may be that the remaining memory and/or the remaining running memory of the first device are/is less than or equal to a twenty-first threshold, or a memory and/or a running memory of the first device are/is in a full-load state; and the second condition may be that the remaining memory and/or the remaining running memory of the first device are/is greater than or equal to a twenty-second threshold, or the memory and/or the running memory of the first device are/is not in the full-load state.

Although the second model may be related to the model monitoring process of the first model, the second model does not significantly affect the model monitoring process of the first model under some configurations or scenarios. Therefore, the first condition or the second condition may be whether a configuration with which the second model is currently running belongs to a first configuration or whether a scenario where the second model is currently running belongs to a first scenario. The first configuration or the first scenario may be a configuration or a scenario to which the second model is applicable or not. For example, the second model usually works under the first configuration, but cannot work with high performance under a second configuration. Alternatively, the second model usually works under the first scenario, but cannot work with high performance under a second scenario. Based on this, the first condition may be that the configuration with which the second model is currently running belongs to the first configuration or the scenario where the second model is currently running belongs to the first scenario; and the second condition may be that the configuration with which the second model is currently running belongs to a second configuration or does not belong to the first configuration, or the scenario where the second model is currently running belongs to a second scenario or does not belong to the first scenario. In addition, the first configuration, the second configuration, the first scenario, or the second scenario can be configured over pre-configuration, a system broadcast message, protocol pre-definition, or dedicated signaling.

The signal quality of the current serving cell of the first device, the signal quality of the at least one neighbor cell of the current serving cell of the first device, and the signal quality of the at least one cell in the predetermined configuration of the first device may be at least one of the RSRP, the RSRQ, the SINR, or other parameters.

It should be noted that in a case where the first condition and the second condition are associated with a same type of above-mentioned information, a threshold corresponding to the information in the first condition may be the same as or different from a threshold corresponding to the information in the second condition. For example, in a case where both the first condition and the second condition are associated with the bit error rate of the data transmission, the seventh threshold and the eighth threshold may be the same or different.

It should be noted that the fifth information may indicate at least one of the above information.

In the embodiments of the present disclosure, based on the fifth information, an impact of interaction between running models on the model monitoring is considered in the model monitoring process of the first model, which helps to improve accuracy of the model monitoring.

### Sixth information

After the model monitoring task of the first model is completed, or in the model monitoring process of the first model, the model monitoring result of the first model probably needs to be reported. Therefore, the first information may include the sixth information, wherein the sixth information may be the reporting configuration information associated with the model monitoring process of the first model.

As an implementation method, the sixth information includes at least one of: a report event associated with the model monitoring process of the first model, or a report data type associated with the model monitoring process of the first model.

The report event associated with the model monitoring process may include at least one of event identity information or event-associated parameter information. The event identity information of the report event associated with the model monitoring process can be implemented using any one of the implementations of the event identity information of the above model monitoring enable event, which is not elaborated herein for brevity.

A model monitoring result report event may include at least one of a periodically-triggered report event or an event-triggered report event.

With respect to the periodically-triggered report event, the event-associated parameter information may include a reporting period of the model monitoring task, that is, a data recording result of the model monitoring task may be reported once every other reporting period of the model monitoring task.

As an implementation, the event-triggered report event may be associated with at least one of: an amount of model monitoring data, the quantity of evaluations of the model monitoring task, a duration since the first device receives the configuration information associated with the model monitoring process last time, the signal quality of the current serving cell of the first device, the signal quality of the at least one neighbor cell of the current serving cell of the first device, the signal quality of the at least one cell in the predetermined configuration, the remaining resource of the first device, performance of the first model, a type of the current serving cell of the first device, or a current location of the first device.

For example, in a case where the event-triggered report event is associated with the amount of the model monitoring data, the event-triggered report event may be that a total amount of the model monitoring data is greater than or equal to a twenty-third threshold.

In a case where the event-triggered report event is associated with the quantity of evaluations of the model monitoring task, the event-triggered report event may be that the quantity of evaluations of the model monitoring task is greater than or equal to a twenty-fourth threshold.

In a case where the event-triggered report event is associated with the duration since the first device receives the configuration information associated with the model monitoring process last time, the event-triggered report event may be that first duration has passed since the first device receives the configuration information associated with the last model monitoring process last time.

In a case where the event-triggered report event is associated with the signal quality of the current serving cell of the first device, the event-triggered report event of the first device may be that the signal quality of the current serving cell of the first device is less than or equal to a twenty-fifth threshold or the signal quality of the current serving cell of the first device is greater than or equal to a twenty-sixth threshold.

In a case where the event-triggered report event is associated with the signal quality of the at least one neighbor cell of the current serving cell of the first device, the event-triggered report event of the first device may be that the signal quality of the at least one neighbor cell of the current serving cell of the first device is greater than or equal to a twenty-seventh threshold.

In a case where the event-triggered report event is associated with the signal quality of the at least one cell in the predetermined configuration, the event-triggered report event of the first device may be that the signal quality of the at least one cell in the predetermined configuration is greater than or equal to a twenty-eighth threshold.

In a case where the event-triggered report event is associated with the remaining resource of the first device, the event-triggered report event of the first device may be that the remaining resource of the first device is less than or equal to a twenty-ninth threshold. For example, the remaining resource of the first device may be at least one of: the remaining memory and/or the remaining running memory of the first device, the remaining battery capacity of the first device, or one of the remaining computing resource or the remaining processing power resource of the first device. In a case where the remaining resource of the first device includes different information, a threshold corresponding to the event-triggered report event of the first device can be determined based on the content of the remaining resource. In a case where the event-triggered report event of the first device is associated with the remaining memory and/or the remaining running memory of the first device, the event-triggered report event of the first device may be that the remaining memory and/or the remaining running memory of the first device are/is less than or equal to a thirtieth threshold or the memory and/or the running memory of the first device is in the full-load state.

In a case where the event-triggered report event is associated with the performance of the first model, the event-triggered report event may be that the model monitoring result of the first model illustrates that a performance decline percentage of the model or an accuracy decline percentage output by model reasoning is greater than or equal to a thirtieth-first threshold.

In a case where the event-triggered report event is associated with the type of the current serving cell of the first device, the event-triggered report event may be at least one of: the current serving cell of the first device is a cell associated with a first public land mobile network (PLMN) list, the current serving cell of the first device is a cell associated with a first tracking area code (TAC) list, the current serving cell of the first device is a cell associated with a first frequency list, or the current serving cell of the first device is a cell associated with a first frequency band or a frequency band combination list.

In a case where the event-triggered report event is associated with the current location of the first device, the event-triggered report event may be that the current serving cell of the first device belongs to a first cell list or the current location of the first device belongs to a first location area. For example, a cell in the first cell list or the first location area may be a cell or an area that focuses on model performance, such as a cell or an area that has resource shortage or poor communication quality.

The signal quality of the current serving cell of the first device, the signal quality of the at least one neighbor cell of the current serving cell of the first device, and the signal quality of the at least one cell in the predetermined configuration of the first device may be the at least one of the RSRP, the RSRQ, the SINR, or other parameters.

In some embodiments, subsequent to triggering the event-triggered report event, the first device may report captured model monitoring data in one shot, or may periodically report the captured model monitoring data based on a predetermined period. A quantity of event-triggered periodic reporting times is configured over a configuration process.

The above-mentioned event-associated parameter information may be at least one of threshold information corresponding to the above event-triggered report event. For example, the event-associated parameter information may include at least one of the twenty-third threshold to the thirtieth-first threshold, the first duration, the first PLMN list, the first TAC list, the first frequency list, the first frequency band or the frequency band combination list, the first cell list, the first location area, the predetermined period, or the quantity of event-triggered periodic reporting times.

In addition, any parameter in the event-associated parameter information can be configured over pre-configuration, a system broadcast message, protocol pre-definition, or dedicated signaling.

As an implementation, the report data type associated with the model monitoring process of the first model may include at least one of following types: the throughput, the bit error rate, the packet delay, a distribution difference or a characteristic difference between actual input data of the first model and standard input data of a model, a distribution difference or a characteristic difference between actual output data of the first model and standard output data of the model, the performance decline percentage of the first model or a difference or a ratio between current performance of the first model and standard performance of the model, an accuracy percentage or an inaccuracy percentage of an output result of the first model, or an output result acquired by the first model through reasoning and a real result that corresponds to a model output quantity and is acquired by actual measurement.

### Seventh information

As an implementation, the first information may include the seventh information, wherein the seventh information may indicate whether to activate the model monitoring task of the first model.

The seventh information may indicate activation of the model monitoring task of the first model. For example, the seventh information may indicate activation of one model monitoring task of the first model, or may indicate activation of all model monitoring tasks of the first model, or may indicate activation of all model monitoring tasks of a plurality of first models.

The seventh information may indicate deactivation of the model monitoring task of the first model. For example, the seventh information may indicate deactivation of the one model monitoring task of the first model, or may indicate deactivation of all the model monitoring tasks of the first model, or may indicate deactivation of all the model monitoring tasks of the plurality of first models.

### Eighth information

In a case where many second models are present, the third model can be used to indirectly indicate the second model to reduce a cost of a configuration resource. The third model may be a model not related to the model monitoring process of the first model, that is, the third model does not affect or slightly affects the model monitoring process of the first model.

Therefore, the first information may include the eighth information, wherein the eighth information may be the association information of the third model. The association information of the third model may include model identity information of the third model. In the model monitoring process of the first model, based on the eighth information, all models excluding the third model can be determined as models related to the model monitoring process of the first model, i.e., the second models.

For a processing manner for the second model in the model monitoring process of the first model, reference may be made to at least one of the above-mentioned processing manners.

As an implementation, the first information can be configured or pre-defined based on a first granularity. The first granularity corresponds to one of a model ID, a model ID group, or a communication device.

The first information is configured based on the granularity of the model ID, which is simple to implement and flexible to use. In a process of performing the model monitoring on a plurality of first models at the same time, in order to simplify the configuration information and save the configuration resource, the first information may be configured based on the granularity of the model ID group or the granularity of the device.

The model deployment location information of the first model mentioned above can be implemented in a plurality of manners, and different configuration granularities can be adopted for different implementations. For example, in a case whre the model deployment location information of the first model is indicated by the flag bit, the configuration can be performed based on the granularity of the model ID (that is, one model ID is associated with one flag bit). For another example, in a case where the model deployment location information of the first model is indicated by the threshold information, the configuration can be performed based on the granularity of the model ID or the granularity of the model ID group.

Any piece of information included in each of the above-mentioned fourth information, fifth information, sixth information, seventh information, and fourteenth information can be configured or pre-defined based on the granularity of the model ID, the granularity of the model ID group, or the granularity of the device. For example, a value of each type of information in the above information can be associated with a model ID of one to-be-monitored model, model IDs of a group of to-be-monitored models, or model IDs of all to-be-monitored models. In a case where any type of information in the above information is associated with the model IDs of all the to-be-monitored models, all the to-be-monitored models share the any type of information. In a case where the seventh information is associated with the model IDs of all the to-be-monitored models, model monitoring tasks associated with all the to-be-monitored models are either activated or deactivated simultaneously.

The above-mentioned ninth information can be configured or pre-defined based on the granularity of the model ID or the granularity of the model ID group. That is, a model ID associated with one to-be-monitored model is associated with one set of resource configuration information, or model IDs of a group of to-be-monitored models are associated with one set of resource configuration information.

As another implementation, in addition to the above three granularities, the first granularity may also correspond to one of a granularity of a frequency range (FR), a granularity of a subcarrier spacing (SCS), a granularity of a device attribute, a granularity of a frequency band, or a granularity of a frequency band combination.

The above-mentioned tenth information to thirteenth information can be configured or pre-defined based on at least one of: the granularity of the model ID, the granularity of the model ID group, the granularity of the RF, the granularity of the SCS, the granularity of the device attribute, the granularity of the frequency band, or the granularity of the frequency band combination. Configuration granularities of the tenth information to the thirteenth information may be the same or different, which is not limited in the present disclosure.

It should be noted that in a case where any type of information in the above information includes a plurality of types of information, the plurality of types of information may use a same configuration granularity or different configuration granularities. In some cases, one type of information in the plurality of types of information may also be configured at different granularities based on a usage condition, which is not limited in the present disclosure.

A configuration manner for the model monitoring process is described above, and the following describes a dynamic indication process of the model monitoring. The above-mentioned configuration manner may be used alone or in conjunction with the dynamic indication process.

The dynamic indication process of the model monitoring may include a plurality of scenarios. For example, the dynamic indication process of the model monitoring may include at least one of activating or deactivating the model monitoring task of the first model, activating or deactivating at least one of transmission or reception of the reference signal associated with the model monitoring process of the first model, indicating a correlation between models, or dynamically indicating reporting of the model monitoring data.

It should be noted that occurrence time of any dynamic indication process of the model monitoring is not limited in the present disclosure.

As an implementation, the first device may receive fifteenth information from the second device, wherein the fifteenth information can be used to activate or deactivate the model monitoring task of the first model. A granularity of the activation or the deactivation may be a single model monitoring task, a plurality of model monitoring tasks, or all model monitoring tasks. In some embodiments, the fifteenth information may include model identity information of at least one first model or may not include the model ID. For example, the fifteenth information including an ID of one model indicates that a model monitoring task associated with the one model is activated or deactivated; the fifteenth information including IDs of a plurality of models indicates that model monitoring tasks associated with the plurality of models are activated or deactivated; or the fifteenth information not including the model ID indicates that the model monitoring tasks associated with all the to-be-monitored models are activated or deactivated.

In a case where the fifteenth information is used to activate the model monitoring task of the first model, the first device may perform an operation associated with the model monitoring task of the first model. For example, the first device can perform at least one of: determining whether the model monitoring enable event of the first device is satisfied, capturing the model monitoring data of the first model, transmitting and/or receiving the reference signal associated with the model monitoring process of the first model, determining whether at least one of the first condition or the second condition is satisfied; or determining whether the report event associated with the model monitoring process of the first model is satisfied. The first condition is a condition under which the second model participates in the model monitoring process of the first model, the second condition is a condition under which the second model does not participate in the model monitoring process of the first model, and the second model is related to the model monitoring process of the first model. For the first condition and the second condition herein, reference may be made to the foregoing relevant description, which is not elaborated herein for brevity.

On the contrary, in a case where the fifteenth information is used to deactivate the model monitoring task of the first model, the first device does not need to perform the foregoing operations.

In a case where the first device receives the fifteenth information from the second device, the first device may also transmit response information of the fifteenth information to the second device. The response information for the fifteenth information is used to indicate whether a request corresponding to the fifteenth information is accepted or rejected. In some embodiments, the response information of the fifteen information may include the model identity information of the at least one first model or may not include the model ID. In some embodiments, a granularity at which the response information of the fifteenth information indicates that the request corresponding to the fifteenth information is received or rejected may be the single model monitoring task, the plurality of model monitoring tasks, or all the model monitoring tasks.

In some embodiments, the first device may transmit first request information to the second device, wherein the first request information is used to request the second device to activate or deactivate the model monitoring task of the first model. A granularity at which the first request information is used to request to activate or deactivate the model monitoring task may be the single model monitoring task, the plurality of model monitoring tasks, or all the model monitoring tasks. In some embodiments, the first request information may include the model identity information of the at least one first model or may not include the model ID. For example, the first request information including an ID of one model indicates that a model monitoring task associated with the one model is requested to be activated or deactivated; the first request information including IDs of a plurality of models indicates that model monitoring tasks associated with the plurality of models are requested to be activated or deactivated; or the first request information not including the model ID indicates that the model monitoring tasks associated with all the to-be-monitored models are requested to be activated or deactivated.

As an implementation, the first device may receive sixteenth information from the second device, wherein the sixteenth information can be used to activate or deactivate at least one of the transmission or the reception of the reference signal associated with the model monitoring process of the first model. The sixteenth information may be used to activate or deactivate at least one of the transmission or the reception of one reference signal associated with the model monitoring process of the first model, a group of reference signals associated with the model monitoring process of the first model, or all reference signals associated with the model monitoring process of the first model. In practice, the sixteenth information may include the model identity information of the at least one first model or may not include the model ID. For example, the sixteenth information including an ID of one model indicates that at least one of transmission or reception of a reference signal associated with the one model is activated or deactivated; the sixteenth information including IDs of a plurality of models indicates that at least one of transmission or reception of reference signals associated with the plurality of models is activated or deactivated; or the sixteenth information not including the model ID indicates that at least one of transmission or reception of reference signals associated with all the to-be-monitored models are/is activated or deactivated.

In a case where the reference signal configuration information associated with the model monitoring process of the first model includes both configuration information for transmitting the reference signal and configuration information for receiving the reference signal, the sixteenth information may indicate, using different information fields, activation or deactivation of the configuration information for transmitting the reference signal and the configuration information for receiving the reference signal. The sixteenth information may be used to simultaneously activate or deactivate the configuration information for transmitting the reference signal and the configuration information for receiving the reference signal. In a case where the first device receives the sixteenth information from the second device, the first device may transmit response information for the sixteenth information to the second device. The response information for the sixteenth information is used to indicate whether a request corresponding to the sixteenth information is accepted or rejected. In some embodiments, the response information of the sixteenth information may include the model identity information of the at least one first model or may not include the model ID. In some embodiments, a granularity at which the response information of the sixteenth information indicates that the request corresponding to the sixteenth information is received or rejected may be the single model monitoring task, the plurality of model monitoring tasks, or all the model monitoring tasks.

In some embodiments, the first device may transmit second request information to the second device, wherein the second request information is used to request the second device to activate or deactivate at least one of transmission or reception of the reference signal associated with the model monitoring process of the first model. A granularity at which the second request information is used to request to activate or deactivate at least one of transmission or reception of the reference signal associated with the model monitoring process may be the single model monitoring task, the plurality of model monitoring tasks, or all the model monitoring tasks. In some embodiments, the second request information may include the model identity information of the at least one first model or may not include the model ID. For example, the second request information including an ID of one model indicates that at least one of transmission or reception of a reference signal associated with a model monitoring process associated with the one model is requested to be activated or deactivated; the second request information including IDs of a plurality of models indicates that at least one of transmission or reception of reference signals associated with model monitoring processes associated with the plurality of models is requested to be activated or deactivated; or the second request information not including the model ID indicates that at least one of transmission or reception of reference signals associated with model monitoring processes associated with all the to-be-monitored models is requested to be activated or deactivated.

The above-mentioned fifteenth information and sixteenth information may be implemented using same information or a same information field of same control signaling. That is, the same information or the same information field of the same control signaling can be used to simultaneously activate the model monitoring task of the first model and at least one of transmission or reception of the reference signal associated with the model monitoring process of the first model, or simultaneously deactivate the model monitoring task of the first model and at least one of transmission or reception of the reference signal associated with the model monitoring process of the first model. The fifteenth information and the sixteenth information may be implemented using different information, different information fields of the same control signaling, or different control signaling. That is, the different information, the different information fields of the same control signaling, or the different control signaling can be used to respectively activate the model monitoring task of the first model, activate at least one of transmission or reception of the reference signal associated with the model monitoring process of the first model, deactivate the model monitoring task of the first model, and deactivate at least one of transmission or reception of the reference signal associated with the model monitoring process of the first model.

As an implementation, the first device may transmit seventeenth information to the second device, wherein the seventeenth information may indicate the correlation between the models. For example, the seventeenth information may include at least one of mutually associated model IDs or a condition for mutual association between the models. The mutually associated model IDs may be IDs of models that are affected each other or significantly affected each other in the model monitoring process. The mutually associated model IDs may be provided in a one-to-one, many-to-one, one-to-many, or many-to-many association relationship. For example, for a model identifier A, IDs corresponding to models that have a mutual correlation with the model ID A are a model ID B and a model ID C; and for the model ID B, IDs corresponding to models that have a mutual correlation with the model ID B are the model ID A and a model ID D. Mutual-correlation condition information indicates a condition under which the models affect each other, such as at least one of the above first condition or the above second condition.

In some embodiments, the first device may receive request information used to report model mutual-correlation indication information from the second device. The request information may include model identity information associated with a model on which the second device focuses and/or an upper limit on a quantity of model IDs that are associated with the focused model and are allowed to be reported. For example, in a case where the upper limit on the quantity of model IDs that are associated with the focused model and are allowed to be reported is 3, the first device can only report model IDs associated with at most three focused models, and an ID corresponding to a model that has a mutual correlation with the three focused models.

In some embodiments, as an implementation, the first device may receive third request information from the second device, wherein the third request information is used to trigger the reporting of the model monitoring data. A granularity of the request may be the single model monitoring task, the plurality of model monitoring tasks, or all the model monitoring tasks. In some embodiments, the third request information may include the model identity information of the at least one first model or may not include the model ID. For example, the third request information including an ID of one model indicates that model monitoring data associated with the one model is requested to be reported; the third request information including IDs of a plurality of models indicates that model monitoring data associated with the plurality of models is requested to reported; or the third request information not including the model ID indicates that model monitoring data associated with all the to-be-monitored models is requested to reported.

In a case where model monitoring tasks of some or all first models are completed, or the predetermined condition is satisfied, or the model monitoring result report event is satisfied, the first device may transmit the model monitoring result of the first model to the second device, such as a model monitoring report. As an implementation, the model monitoring result may include at least one of a model ID of a monitored model, captured model monitoring data, or a model monitoring recommendation.

For example, in a case where the first device transmits the model monitoring result of the first model to the second device, the model monitoring result may include the model ID of the first model, and may also include the captured model monitoring data. A one-to-one or many-to-one association relationship may be present between model identity information of the monitored model and captured model monitoring data information. That is, a model ID associated with one monitored model is associated with a set of captured model monitoring data information, or model IDs associated with a plurality of monitored models are associated with a set of captured model monitoring data information.

The captured model monitoring data information may include at least one of: the throughput, the bit error rate, the packet delay, a distribution difference or a characteristic difference between actual input data of the model and standard input data of the model, a distribution difference or a characteristic difference between actual output data of the model and standard output data of the model, a performance decline percentage of the model or a difference or a ratio between current performance of the model and standard performance of the model, an accuracy percentage or an inaccuracy percentage of an output result of the model, or an output result acquired by the first model through reasoning and a real result that corresponds to a model output result and is acquired by actual measurement.

For another example, the model monitoring result of the first model may include the model monitoring recommendation. The model monitoring recommendation may be determined based on the captured model monitoring data. As an example, whether the first model runs or performs well, whether the first model is suitable for a current usage scenario, whether current monitoring configuration information of the first model is proper, and the like may be determined based on the captured model monitoring data. The model monitoring recommendation may be determined based on the above information. In a case where the first model is poorly used, the model monitoring recommendation may include indication information for recommending to switch the model, indication information for recommending to stopping monitoring the model, and indication information for recommending to modify model monitoring configuration information. In a case where the first model needs to be switched, the mode monitoring recommendation may include a model ID of a suggested switched-to target model. In a case where a current monitoring configuration information of the first model is improper, the model monitoring recommendation may include suggested model monitoring configuration information of the first model. In a case where the first model is used well, the model monitoring recommendation may include indication information for recommending to stopping monitoring the model. In some cases, for example, in a case where the model monitoring configuration information is modified or a model usage scenario changes, it is necessary to restart the model monitoring task. Therefore, the model monitoring recommendation may include indication information for recommending to re-trigger the model monitoring.

As an implementation, the first device may receive request information of the model monitoring result from the second device, wherein the request information of the model monitoring result may be used to request the model monitoring result of the first model. As an example, the request information of the model monitoring result may include model identity information associated with a focused monitored model (such as the first model) and/or focused data type information in data captured in the model monitoring process.

As an implementation, the first device may transmit indication information indicating that the model monitoring result is extractable to the second device, wherein the indication information indicating that the model monitoring result is extractable may indicate to the second device that the model monitoring result already recorded by the first device can be extracted at any time. For example, the indication information indicating that the model monitoring result is extractable may be one-bit indication information, indicating, using different values, whether the model monitoring result is extractable. For another example, the indication information indicating that the model monitoring result is extractable may include model identity information associated with the captured model monitoring data and/or data type information of the captured model monitoring data.

Relevant model monitoring capabilities supported by different devices are different, and a model monitoring manner adapted to a device can be determined based on information of a relevant model monitoring capability supported by the device. As an implementation, the first device can transmit capability information associated with the model monitoring process of the first model to the second device. The capability information may be capability information that is of the first device and associated with the model monitoring process of the first model.

For example, the capability information may include capability information about whether a device supports the model monitoring for a plurality of models. With respect to the device supporting the model monitoring for the plurality of models, the model monitoring can be performed on at least one model simultaneously. As an example, the capability information about whether to support the model monitoring for the plurality of models may include whether to support a model monitoring manner that considers mutual influence of the plurality of models, and/or a supported maximum quantity of models on which the model monitoring can be performed simultaneously. The supported maximum quantity of models on which the model monitoring can be simultaneously performed has different meanings under different conditions. In a case where each to-be-monitored model is associated with a set of model monitoring configurations, the supported maximum quantity of models on which the model monitoring can be simultaneously performed is a maximum quantity of models on which the model monitoring and control is simultaneously performed. In a case where at least two to-be-monitored models associated with a same set of model monitoring configurations are present, the supported maximum quantity of models on which the model monitoring can be simultaneously performed is a maximum quantity of sets of model monitoring configurations that the first device can support simultaneously.

For another example, the capability information may include capability information associated with the reference signal. As an example, the capability information associated with the reference signal may include capability information associated with the transmission of the reference signal and/or capability information associated with the reception of the reference signal. The capability information associated with the transmission of the reference signal may include at least one of whether to support the transmission of the reference signal associated with the first model, a type of the reference signal that is associated with the first model and can be transmitted, or a maximum quantity of reference signals that are associated with the first model and can be transmitted simultaneously. The capability information associated with the reception of the reference signal may include at least one of whether to support the reception of the reference signal associated with the first model, a type of the reference signal that is associated with the first model and can be received, or a maximum quantity of reference signals that are associated with the first model and can be received simultaneously.

Because the first device may support the model monitoring for some or all models, the capability information may include information of a model for which the model monitoring is supported, such as identity information of the model for which the model monitoring is supported.

The capability information may include information associated with whether to support dynamic configuration of the model monitoring. As an example, the information associated with whether to support the dynamic configuration of the model monitoring may include at least one of capability information about whether to support dynamic activation or deactivation of the model monitoring task, whether to support dynamic activation or deactivation of at least one of the transmission or reception of the reference signal corresponding to the reference signal configuration associated with the first model, whether to support dynamic indication of the correlation between the models, or whether to support dynamic indication of the reporting of the model monitoring data.

The capability information that is of the first device and associated with the model monitoring process of the first model is described above. However, in some cases, the model monitoring process of the first model needs cooperation from the second device. In other cases, the first device needs to provide cooperation in performing the model monitoring on a fourth model in the second device. Regardless of the above cases, the first device may need to receive capability information associated with a model monitoring process from the second device. The capability information associated with the model monitoring process is similar to the above-mentioned capability information associated with the model monitoring process of the first model, which is not elaborated herein for brevity. It should be noted that the capability information that is of the second device and associated with the model monitoring process may be the same as or different from the capability information associated with the model monitoring process of the first model, which is not limited in the present disclosure.

The method for wireless communication according to the embodiments of the present disclosure has a wide range of applications, which can monitor a model deployed at a configuration receiver, a model deployed at a configuration transmitter, and a model deployed by a third party (rather than the configuration transmitter and the configuration receiver).

As an implementation, any one type of the above-mentioned information may be carried by any one of following messages, or any one of the above-mentioned messages may be any one of following messages: an LTE Positioning Protocol (LPP) message, a non-access stratum (NAS) message, a radio resource control protocol (RRC) message, a media access control element (MAC CE) message, a downlink control information (DCI) message, an uplink control information (UCI) message, a physical uplink control channel (PUCCH) message, a physical uplink shared channel (PUSCH) message, an inter-node message, an Xn message, an F1 message, an E1 message, an NG message, or a core network bus message.

As another implementation, any one type of the above-mentioned information may be carried by any one of following messages, or any one of the above-mentioned messages may be any one of following messages: a unicast message, a multicast message, or a broadcast message. An information source can transmit the unicast message over a unicast channel, and only a terminal device that has been allocated a corresponding unicast resource is capable of attempting to receive the unicast message. The unicast message may also be referred to as the dedicated signaling. The information source can transmit the multicast message over a multicast channel, and a terminal device that is within coverage of a multicast signal and is a group member is capable of attempting to receive the multicast message. In a case of joining a group, a terminal device acquires a relevant resource of the multicast channel. The information source can transmit the broadcast message over a broadcast channel, and any terminal device within coverage of a broadcast signal is capable of attempting to receive the broadcast message.

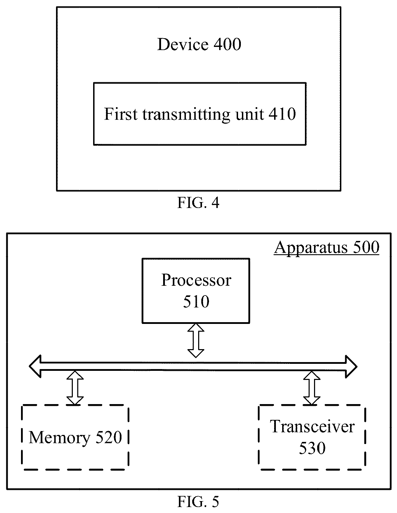

The method embodiments of the present disclosure are described in detail above with reference to FIG. 1 and FIG. 2. Apparatus embodiments of the present disclosure are described in detail hereinafter with reference to FIG. 3 and FIG. 4. It should be understood that the description of the method embodiments corresponds to that of the apparatus embodiments. For portions not described in detail, reference may be made to the above method embodiments.

FIG. 3 is a schematic diagram of a device for wireless communication according to some embodiments of the present disclosure. The device 300 illustrated in FIG. 3 includes a first receiving unit 310.

The first receiving unit 310 is configured to receive first information from a second device, wherein the first information is associated with a model monitoring process of a first model.

In some embodiments, the first information is configuration information associated with the model monitoring process of the first model.

In some embodiments, the first information includes at least one of: second information, used to determine the first model; third information, wherein the third information is constraint information associated with the model monitoring process of the first model; fourth information, wherein the fourth information is reference signal configuration information associated with the model monitoring process of the first model; fifth information, wherein the fifth information is association information of a second model, the second model being related to the model monitoring process of the first model; sixth information, wherein the sixth information is reporting configuration information associated with the model monitoring process of the first model; seventh information, wherein the seventh information is used to indicate whether to activate a model monitoring task of the first model; or eighth information, wherein the eighth information is association information of a third model, the third model being not related to the model monitoring process of the first model.

In some embodiments, the second information indicates at least one of a model ID of the first model or a model deployment location of the first model.

In some embodiments, the third information includes at least one of: ninth information, wherein the ninth information is used to indicate a resource configuration associated with the model monitoring process of the first model; tenth information, wherein the tenth information is used to indicate one of a duration corresponding to a single model monitoring and evaluation process of the first model, a minimum duration corresponding to the single model monitoring and evaluation process of the first model, or a duration proportion corresponding to the single model monitoring and evaluation process of the first model; eleventh information, wherein the eleventh information is used to indicate a quantity of evaluations of the model monitoring task of the first model or a minimum quantity of evaluations of the model monitoring task of the first model; twelfth information, wherein the twelfth information is used to indicate a time interval between any two adjacent model monitoring and evaluation processes of the first model or a minimum time interval between any two adjacent model monitoring and evaluation processes of the first model; thirteenth information, wherein the thirteenth information is used to indicate one of a duration corresponding to the model monitoring task of the first model, a minimum duration corresponding to the model monitoring task of the first model, or a duration proportion corresponding to the model monitoring task of the first model; or fourteenth information, wherein the fourteenth information is used to indicate relevant information of a model monitoring enable event of the first model.

In some embodiments, the fourteenth information includes at least one of identity information of the model monitoring enable event or parameter information associated with the model monitoring enable event.

In some embodiments, the model monitoring enable event includes an event-triggered enable event, wherein the event-triggered enable event is associated with at least one of: a bit error rate of data transmission, a packet delay of data transmission, a throughput of data transmission, signal quality of a current serving cell of the first device, signal quality of at least one neighbor cell of a current serving cell of the first device, or signal quality of at least one cell in a predetermined configuration.

In some embodiments, the fourth information includes at least one of: reference signal configuration information corresponding to a reference signal received by the first device, reference signal configuration information corresponding to a reference signal transmitted by the first device, or indication information on whether to activate a reference signal configuration associated with the model monitoring process of the first model.

In some embodiments, the fifth information indicates at least one of: a model ID of the second model, a model deployment location of the second model, a first condition under which the second model participates in the model monitoring process of the first model, or a second condition under which the second model does not participate in the model monitoring process of the first model.

In some embodiments, the first condition or the second condition is associated with at least one of: a bit error rate of data transmission, a packet delay of data transmission, a throughput of data transmission, signal quality of a current serving cell of the first device, signal quality of at least one neighbor cell of a current serving cell of the first device, signal quality of at least one cell in a predetermined configuration, a remaining resource of the first device, whether a configuration with which the second model is currently running belongs to a first configuration, or whether a scenario where the second model is currently running belongs to a first scenario.

In some embodiments, within a model monitoring period of the first model, the second model is suspended from use or the second model is used in a first mode; and beyond the model monitoring period of the first model, the second model is used based on a second mode; wherein the first mode is different from the second mode.

In some embodiments, the sixth information includes at least one of a report event associated with the model monitoring process of the first model or a report data type associated with the model monitoring process of the first model.

In some embodiments, the report event associated with the model monitoring process comprises an event-triggered report event, wherein the event-triggered report event is associated with at least one of: an amount of model monitoring data, a quantity of evaluations of the model monitoring task, a duration since the first device receives configuration information associated with the model monitoring process last time, signal quality of a current serving cell of the first device, signal quality of at least one neighbor cell of a current serving cell of the first device, signal quality of at least one cell in a predetermined configuration, a remaining resource of the first device, performance of the first model, a type of a current serving cell of the first device, or a current location of the first device.

In some embodiments, the remaining resource of the first device includes at least one of: remaining memory of the first device, a remaining battery capacity of the first device, or one of a remaining computing resource of the first device or a remaining processing power resource of the first device.

In some embodiments, the first information is configured based on a first granularity, wherein the first granularity corresponds to one of a model ID, a model ID group, or a communication device.

In some embodiments, the first information is configured to perform one of aperiodic model monitoring, semi-periodic model monitoring, or periodic model monitoring on the first model.

In some embodiments, the device further includes: a second receiving unit, configured to receive fifteenth information from the second device, wherein the fifteenth information is used to activate or deactivate a model monitoring task of the first model.

In some embodiments, the device further includes: a first transmitting unit, configured to transmit response information for the fifteenth information to the second device, wherein the response information for the fifteenth information is used to indicate whether a request corresponding to the fifteenth information is accepted or rejected.

In some embodiments, in a case where the fifteenth information is used to activate the model monitoring task of the first model, the device further includes an executing unit configured to perform at least one of: determining whether a model monitoring enable event of the first device is satisfied, capturing model monitoring data of the first model, transmitting and/or receiving a reference signal associated with the model monitoring process of the first model, determining whether at least one of a first condition or a second condition is satisfied, or determining whether a report event associated with the model monitoring process of the first model is satisfied; wherein the first condition is a condition under which a second model participates in the model monitoring process of the first model, the second condition is a condition under which the second model does not participate in the model monitoring process of the first model, and the second model is related to the model monitoring process of the first model.

In some embodiments, the device further includes: a third receiving unit, configured to receive sixteenth information from the second device, wherein the sixteenth information is used to activate or deactivate at least one of transmission or reception of a reference signal associated with the model monitoring process of the first model.

In some embodiments, the device further includes: a second transmitting unit, configured to transmit seventeenth information to the second device, wherein the seventeenth information indicates a correlation between models.

In some embodiments, the seventeenth information includes at least one of mutually associated model IDs or a condition for mutual association between the models.

In some embodiments, the device further includes: a third transmitting unit, configured to transmit a model monitoring result to the second device.

In some embodiments, the model monitoring result includes at least one of: a model ID of a monitored model, captured model monitoring data, or a model monitoring recommendation.

In some embodiments, the model monitoring recommendation includes at least one of: indication information for recommending to stop running the model, indication information for recommending to switch the model, a model ID of a target model recommended for switching to, indication information for recommending to re-trigger model monitoring, indication information for recommending to stopping monitoring the model, indication information for recommending to modify model monitoring configuration information, or recommended model monitoring configuration information.

In some embodiments, the device further includes: a fourth transmitting unit, configured to transmit capability information to the second device, wherein the capability information is associated with the model monitoring process of the first model.

In some embodiments, the capability information includes at least one of: capability information about whether to support model monitoring for a plurality of models, capability information associated with a reference signal, information of a model for which model monitoring is supported, or information associated with whether to support dynamic configuration of model monitoring.

In some embodiments, the first device is a first terminal device, and the second device is a network device or a second terminal device; or the first device is a first network device, and the second device is a terminal device or a second network device.

FIG. 4 is a schematic diagram of another device for wireless communication according to some embodiments of the present disclosure. The device 400 illustrated in FIG. 4 includes a first transmitting unit 410.

The first transmitting unit 410 is configured to transmit first information to a first device, wherein the first information is associated with a model monitoring process of a first model.

In some embodiments, the first information is configuration information associated with the model monitoring process of the first model.

In some embodiments, the first information includes at least one of: second information, used to determine the first model; third information, wherein the third information is constraint information associated with the model monitoring process of the first model; fourth information, wherein the fourth information is reference signal configuration information associated with the model monitoring process of the first model; fifth information, wherein the fifth information is association information of a second model, the second model being related to the model monitoring process of the first model; sixth information, wherein the sixth information is reporting configuration information associated with the model monitoring process of the first model; seventh information, wherein the seventh information is used to indicate whether to activate a model monitoring task of the first model; or eighth information, wherein the eighth information is association information of a third model, the third model being not related to the model monitoring process of the first model.

In some embodiments, the second information indicates at least one of a model ID of the first model or a model deployment location of the first model.

In some embodiments, the third information includes at least one of: ninth information, wherein the ninth information is used to indicate a resource configuration associated with the model monitoring process of the first model; tenth information, wherein the tenth information is used to indicate one of a duration corresponding to a single model monitoring and evaluation process of the first model, a minimum duration corresponding to the single model monitoring and evaluation process of the first model, or a duration proportion corresponding to the single model monitoring and evaluation process of the first model; eleventh information, wherein the eleventh information is used to indicate a quantity of evaluations of the model monitoring task of the first model or a minimum quantity of evaluations of the model monitoring task of the first model; twelfth information, wherein the twelfth information is used to indicate a time interval between any two adjacent model monitoring and evaluation processes of the first model or a minimum time interval between any two adjacent model monitoring and evaluation processes of the first model; thirteenth information, wherein the thirteenth information is used to indicate one of a duration corresponding to the model monitoring task of the first model, a minimum duration corresponding to the model monitoring task of the first model, or a duration proportion corresponding to the model monitoring task of the first model; or fourteenth information, wherein the fourteenth information is used to indicate relevant information of a model monitoring enable event of the first model.

In some embodiments, the fourteenth information includes at least one of identity information of the model monitoring enable event or parameter information associated with the model monitoring enable event.

In some embodiments, the model monitoring enable event comprises an event-triggered enable event, wherein the event-triggered enable event is associated with at least one of: a bit error rate of data transmission, a packet delay of data transmission, a throughput of data transmission, signal quality of a current serving cell of the first device, signal quality of at least one neighbor cell of a current serving cell of the first device, or signal quality of at least one cell in a predetermined configuration.

In some embodiments, the fourth information includes at least one of: reference signal configuration information corresponding to a reference signal received by the first device, reference signal configuration information corresponding to a reference signal transmitted by the first device, or indication information on whether to activate a reference signal configuration associated with the model monitoring process of the first model.

In some embodiments, the fifth information indicates at least one of: a model ID of the second model, a model deployment location of the second model, a first condition under which the second model participates in the model monitoring process of the first model, or a second condition under which the second model does not participate in the model monitoring process of the first model.

In some embodiments, the first condition or the second condition is associated with at least one of: a bit error rate of data transmission, a packet delay of data transmission, a throughput of data transmission, signal quality of a current serving cell of the first device, signal quality of at least one neighbor cell of a current serving cell of the first device, signal quality of at least one cell in the predetermined configuration, a remaining resource of the first device, whether a configuration with which the second model is currently running belongs to a first configuration, or whether a scenario where the second model is currently running belongs to a first scenario.

In some embodiments, within a model monitoring period of the first model, the second model is suspended from use or the second model is used in a first mode; and beyond the model monitoring period of the first model, the second model is used in a second mode; wherein the first mode is different from the second mode.

In some embodiments, the sixth information includes at least one of a report event associated with the model monitoring process of the first model or a report data type associated with the model monitoring process of the first model.

In some embodiments, the report event associated with the model monitoring process comprises an event-triggered report event, wherein the event-triggered report event is associated with at least one of: an amount of model monitoring data, a quantity of evaluations of the model monitoring task, a duration since the first device receives configuration information associated with the model monitoring process last time, signal quality of a current serving cell of the first device, signal quality of at least one neighbor cell of a current serving cell of the first device, signal quality of at least one cell in a predetermined configuration, a remaining resource of the first device, performance of the first model, a type of a current serving cell of the first device, or a current location of the first device.

In some embodiments, the remaining resource of the first device includes at least one of: remaining memory of the first device, a remaining battery capacity of the first device, or one of a remaining computing resource of the first device or a remaining processing power resource of the first device.

In some embodiments, the first information is configured based on a first granularity, wherein the first granularity corresponds to one of a model ID, a model ID group, or a communication device.

In some embodiments, the first information is configured to perform one of aperiodic model monitoring, semi-periodic model monitoring, or periodic model monitoring on the first model.

In some embodiments, the device further includes: a second transmitting unit, configured to transmit fifteenth information to the first device, wherein the fifteenth information is used to activate or deactivate a model monitoring task of the first model.

In some embodiments, the device further includes: a first receiving unit, configured to receive response information for the fifteenth information from the first device, wherein the response information for the fifteenth information is used to indicate whether a request corresponding to the fifteenth information is accepted or rejected.

In some embodiments, in a case where the fifteenth information is used to activate the model monitoring task of the first model, the device further includes an executing unit configured to perform at least one of: determining whether a model monitoring enable event of the first device is satisfied, capturing model monitoring data of the first model, transmitting and/or receiving a reference signal associated with the model monitoring process of the first model, determining whether at least one of a first condition or a second condition is satisfied, or determining whether a report event associated with the model monitoring process of the first model is satisfied; wherein the first condition is a condition under which a second model participates in the model monitoring process of the first model, the second condition is a condition under which the second model does not participate in the model monitoring process of the first model, and the second model is related to the model monitoring process of the first model.

In some embodiments, the device further includes: a third transmitting unit, configured to transmit sixteenth information to the first device, wherein the sixteenth information is used to activate or deactivate at least one of transmission or reception of a reference signal associated with the model monitoring process of the first model.

In some embodiments, the device further includes: a second receiving unit, configured to receive seventeenth information from the first device, wherein the seventeenth information indicates a correlation between models.

In some embodiments, the seventeenth information includes at least one of mutually associated model IDs or a condition for mutual association between the models.

In some embodiments, the device further includes: a third receiving unit, configured to receive a model monitoring result from the first device.

In some embodiments, the model monitoring result includes at least one of a model ID of a monitored model, captured model monitoring data, or a model monitoring recommendation.

In some embodiments, the model monitoring recommendation includes at least one of: indication information for recommending to stop running the model, indication information for recommending to switch the model, a model ID of a target model recommended for switching to, indication information for recommending to re-trigger model monitoring, indication information for recommending to stopping monitoring the model, indication information for recommending to modify model monitoring configuration information, or recommended model monitoring configuration information.

In some embodiments, the device further includes: a fourth receiving unit, configured to receive capability information from the first device, wherein the capability information is associated with the model monitoring process of the first model.

In some embodiments, the capability information includes at least one of: capability information about whether to support model monitoring for a plurality of models, capability information associated with a reference signal, information of a model for which model monitoring is supported, or information associated with whether to support dynamic configuration of model monitoring.

In some embodiments, the first device is a first terminal device, and the second device is a network device or a second terminal device; or the first device is a first network device, and the second device is a terminal device or a second network device.

FIG. 5 is a schematic structural diagram of a communication apparatus according to some embodiments of the present disclosure. A dashed line in FIG. 5 indicates that a corresponding unit or module is optional. The apparatus 500 may be configured to perform the method for wireless communication described in the above method embodiments. The apparatus 500 may be a chip, a first device, or a second device.

The apparatus 500 may include at least one processor 510. The processor 510 can support the apparatus 500 to perform the method for wireless communication described in the above method embodiments. The processor 510 may be a general-purpose processor or a dedicated processor. For example, the processor may be a central processing unit (CPU). Alternatively, the processor may be another general-purpose processor, a digital signal processor (DSP), an application-specific integrated circuit (ASIC), a field-programmable gate array (FPGA) or another programmable logic device, a discrete gate or transistor logic device, a discrete hardware component, or the like. The general-purpose processor may be a microprocessor, or the processor may be any conventional processor or the like.

The apparatus 500 may also include at least one memory 520. The memory 520 stores a program. The program can be performed by the processor 510, such that the processor 510 performs the method for wireless communication described in the above method embodiments. The memory 520 may be independent of the processor 510 or the memory 520 may be integrated in the processor 510.

The apparatus 500 may also include a transceiver 530. The processor 510 can communicate with another device or chip over the transceiver 530. For example, the processor 510 can perform data transmission or data reception with the another device or chip over the transceiver 530.

The embodiments of the present disclosure further provide a computer-readable storage medium configured to store a program. The computer-readable storage medium can be applied to a first device or a second device according to the embodiments of the present disclosure, and the program enables a computer to perform a method for wireless communication performed by a device for wireless communication in the embodiments of the present disclosure.

The embodiments of the present disclosure further provide a computer program product. The computer program product includes a program. The computer program product can be applied to a first device or a second device according to the embodiments of the present disclosure, and the program enables a computer to perform a method for wireless communication performed by a device for wireless communication in the embodiments of the present disclosure.

The embodiments of the present disclosure further provide a computer program. The computer program can be applied to a device for wireless communication according to the embodiments of the present disclosure, and the computer program enables a computer to perform a method for wireless communication performed by the device for wireless communication in the embodiments of the present disclosure.

It should be understood that the terms "system" and "network" are interchangeably used in the present disclosure. The terms used in the embodiments of the present disclosure are used only to illustrate the specific embodiments of the present disclosure, and are not intended to limit the present disclosure. The terms "first," "second," "third," "fourth," or the like in the description, claims and the accompanying drawings of the present disclosure are intended to distinguish between different objects but do not indicate a specific sequence. Moreover, the terms "include," "have," and any variations thereof are intended to cover non-exclusive inclusion.

In the embodiments of the present disclosure, the term "including/comprising" may be direct or indirect inclusion. In some embodiments, the term "including/comprising" mentioned in the embodiments of the present disclosure can be replaced with "indicating" or "used for determining". For example, that A includes B may be replaced with that A indicates B or A is used to determine B.

It should be understood that the term "indication" mentioned in the embodiments of the present disclosure may be a direct indication, an indirect indication, or an association relationship. For example, A indicates B, which may mean that A directly indicates B, for example, B can be acquired using A; may mean that A indirectly indicates B, for example, A indicates C, wherein B can be acquired using C; or may mean an association relationship between A and B.

It should be understood that in the embodiments of the present disclosure, "B corresponding to A" means that B is associated with A, and B can be determined based on A. It should also be understood that determining B based on A means that B not only can be determined only based on A, and but also can be determined based on A and/or other information.

In the description of the embodiments of the present disclosure, the term "corresponding" may indicate a direct corresponding relationship or indirect corresponding relationship between two objects, or indicate an association relationship between two objects, or indicate relationships such as indicating and being indicated, configuring and being configured, or the like.

In the embodiments of the present disclosure, "predefinition" may be implemented by pre-storing corresponding code or a corresponding table in a device (such as the terminal device or the network device) or using another method that can be used to indicate relevant information, and a specific implementation method thereof is not limited in the present disclosure. For example, the term "predefined" refers to "defined in protocols."

In the embodiments of the present disclosure, the "protocols" may be standard protocols in the communication field, for example, the protocols may include an LTE protocol, an NR protocol, or a related protocol applied in a future communication system, which is not limited in the present disclosure.

The term "and/or" in the present disclosure merely describes an association relationship between associated objects, that is, three types of relationships. For example, the phrase "A and/or B" indicates (A), (B), or (A and B). In addition, the character "/" generally indicates an "or" relationship between the associated objects.

It should be understood that in various embodiments of the application, sequence numbers of the foregoing processes do not imply the order of execution. The order of performing the processes should be determined based on their functions and internal logic, and should not constitute any limitation to the implementation process of the embodiments of the application.

In several embodiments provided in the present disclosure, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions in the embodiments.

In addition, functional units in the embodiments of the present disclosure may be integrated into one processing unit, each of the units may exist alone physically, or two or more units are integrated into one unit.

Some or all of the functions in the foregoing embodiments may be implemented by software, hardware, firmware, or any combination thereof. In a case where software is used for implementation, the implementation can be performed in a form of a computer program product in whole or in part. The computer program product includes one or more computer instructions. When the computer program instructions are loaded and run on a computer, the procedures or functions according to the embodiments of the present disclosure are achieved in whole or in part. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave) manner. The computer-readable storage medium may be any usable medium accessible by a computer, or a data storage device such as a server or a data center, integrating one or more usable media. The usable medium may be a magnetic medium (for example, a floppy disk, a hard disk, or a magnetic tape), an optical medium (for example, a digital video disc (DVD), a semiconductor medium (for example, a solid state disk (SSD)), or the like.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure should be subject to the protection scope of the claims.

## Claims

1. A method for wireless communication, performed by a first device, the method comprising:
receiving first information from a second device, wherein the first information is associated with a model monitoring process of a first model.

2. The method according to claim 1, wherein the first information is configuration information associated with the model monitoring process of the first model.

3. The method according to claim 1 or 2, wherein the first information comprises at least one of:
second information, wherein the second information is used to determine the first model;
third information, wherein the third information is constraint information associated with the model monitoring process of the first model;
fourth information, wherein the fourth information is reference signal configuration information associated with the model monitoring process of the first model;
fifth information, wherein the fifth information is association information of a second model, the second model being related to the model monitoring process of the first model;
sixth information, wherein the sixth information is reporting configuration information associated with the model monitoring process of the first model;
seventh information, wherein the seventh information is used to indicate whether to activate a model monitoring task of the first model; or
eighth information, wherein the eighth information is association information of a third model, the third model being not related to the model monitoring process of the first model.

4. The method according to claim 3, wherein the second information is used to indicate at least one of:
a model identifier (ID) of the first model; or
a model deployment location of the first model.

5. The method according to claim 3 or 4, wherein the third information comprises at least one of:
ninth information, wherein the ninth information is used to indicate a resource configuration associated with the model monitoring process of the first model;
tenth information, wherein the tenth information is used to indicate one of a duration corresponding to a single model monitoring and evaluation process of the first model, a minimum duration corresponding to the single model monitoring and evaluation process of the first model, or a duration proportion corresponding to the single model monitoring and evaluation process of the first model;
eleventh information, wherein the eleventh information is used to indicate a quantity of evaluations of the model monitoring task of the first model or a minimum quantity of evaluations of the model monitoring task of the first model;
twelfth information, wherein the twelfth information is used to indicate a time interval between any two adjacent model monitoring and evaluation processes of the first model or a minimum time interval between any two adjacent model monitoring and evaluation processes of the first model;
thirteenth information, wherein the thirteenth information is used to indicate one of a duration corresponding to the model monitoring task of the first model, a minimum duration corresponding to the model monitoring task of the first model, or a duration proportion corresponding to the model monitoring task of the first model; or
fourteenth information, wherein the fourteenth information is used to indicate relevant information of a model monitoring enable event of the first model.

6. The method according to claim 5, wherein the fourteenth information comprises at least one of:
identity information of the model monitoring enable event; or
parameter information associated with the model monitoring enable event.

7. The method according to claim 5 or 6, wherein the model monitoring enable event comprises an event-triggered enable event, wherein the event-triggered enable event is associated with at least one of:
a bit error rate of data transmission;
a packet delay of data transmission;
a throughput of data transmission;
signal quality of a current serving cell of the first device;
signal quality of at least one neighbor cell of a current serving cell of the first device; or
signal quality of at least one cell in a predetermined configuration.

8. The method according to any one of claims 3 to 7, wherein the fourth information comprises at least one of:
reference signal configuration information corresponding to a reference signal received by the first device;
reference signal configuration information corresponding to a reference signal transmitted by the first device; or
indication information on whether to activate a reference signal configuration associated with the model monitoring process of the first model.

9. The method according to any one of claims 3 to 8, wherein the fifth information is used to indicate at least one of:
a model identifier (ID) of the second model;
a model deployment location of the second model;
a first condition under which the second model participates in the model monitoring process of the first model; or
a second condition under which the second model does not participate in the model monitoring process of the first model.

10. The method according to claim 9, wherein the first condition or the second condition is associated with at least one of:
a bit error rate of data transmission;
a packet delay of data transmission;
a throughput of data transmission;
signal quality of a current serving cell of the first device;
signal quality of at least one neighbor cell of a current serving cell of the first device;
signal quality of at least one cell in a predetermined configuration;
a remaining resource of the first device;
whether a configuration with which the second model is currently running belongs to a first configuration; or
whether a scenario where the second model is currently running belongs to a first scenario.

11. The method according to any one of claims 3 to 10, wherein within a model monitoring duration of the first model, the second model is suspended from use or the second model is used in a first mode; and beyond the model monitoring duration of the first model, the second model is used based on a second mode; wherein the first mode is different from the second mode.

12. The method according to any one of claims 3 to 11, wherein the sixth information comprises at least one of:
a report event associated with the model monitoring process of the first model; or
a report data type associated with the model monitoring process of the first model.

13. The method according to claim 12, wherein the report event associated with the model monitoring process comprises an event-triggered report event, wherein the event-triggered report event is associated with at least one of:
an amount of model monitoring data;
a quantity of evaluations of the model monitoring task;
a duration since the first device receives configuration information associated with the model monitoring process last time;
signal quality of a current serving cell of the first device;
signal quality of at least one neighbor cell of a current serving cell of the first device;
signal quality of at least one cell in a predetermined configuration;
a remaining resource of the first device;
performance of the first model;
a type of a current serving cell of the first device; or
a current location of the first device.

14. The method according to claim 10 or 13, wherein the remaining resource of the first device comprises at least one of:
a remaining memory of the first device;
a remaining battery capacity of the first device; or
one of a remaining computing resource of the first device or a remaining processing power resource of the first device.

15. The method according to any one of claims 1 to 14, wherein the first information is configured based on a first granularity, wherein the first granularity corresponds to one of:
a model identifier (ID);
a model ID group; or
a communication device.

16. The method according to any one of claims 1 to 15, wherein the first information is used to perform one of aperiodic model monitoring, semi-periodic model monitoring, or periodic model monitoring on the first model.

17. The method according to any one of claims 1 to 16, further comprising:
receiving fifteenth information from the second device, wherein the fifteenth information is used to activate or deactivate a model monitoring task of the first model.

18. The method according to claim 17, further comprising:
transmitting response information for the fifteenth information to the second device, wherein the response information for the fifteenth information is used to indicate whether a request corresponding to the fifteenth information is accepted or rejected.

19. The method according to claim 17 or 18, wherein in a case where the fifteenth information is used to activate the model monitoring task of the first model, the method further comprises at least one of:
determining whether a model monitoring enable event of the first device is satisfied;
capturing model monitoring data of the first model;
transmitting and/or receiving a reference signal associated with the model monitoring process of the first model;
determining whether at least one of a first condition or a second condition is satisfied; or
determining whether a report event associated with the model monitoring process of the first model is satisfied;
wherein the first condition is a condition under which a second model participates in the model monitoring process of the first model, the second condition is a condition under which the second model does not participate in the model monitoring process of the first model, and the second model is related to the model monitoring process of the first model.

20. The method according to any one of claims 1 to 19, further comprising:
receiving sixteenth information from the second device, wherein the sixteenth information is used to activate or deactivate at least one of transmission or reception of a reference signal associated with the model monitoring process of the first model.

21. The method according to any one of claims 1 to 20, further comprising:
transmitting seventeenth information to the second device, wherein the seventeenth information is used to indicate a correlation between models.

22. The method according to claim 21, wherein the seventeenth information comprises at least one of:
mutually associated model identifiers (IDs); or
a condition for mutual association between the models.

23. The method according to any one of claims 1 to 22, further comprising:
transmitting a model monitoring result to the second device.

24. The method according to claim 23, wherein the model monitoring result comprises at least one of:
a model identifier (ID) of a monitored model;
captured model monitoring data; or
a model monitoring recommendation.

25. The method according to claim 24, wherein the model monitoring recommendation comprises at least one of:
indication information for recommending to stop running the model;
indication information for recommending to switch the model;
a model identifier (ID) of a target model recommended for switching to;
indication information for recommending to re-trigger model monitoring;
indication information for recommending to stopping monitoring the model;
indication information for recommending to modify model monitoring configuration information; or
recommended model monitoring configuration information.

26. The method according to any one of claims 1 to 25, further comprising:
transmitting capability information to the second device, wherein the capability information is associated with the model monitoring process of the first model.

27. The method according to claim 26, wherein the capability information comprises at least one of:
capability information about whether to support model monitoring for a plurality of models;
capability information associated with a reference signal;
information of a model for which model monitoring is supported; or
information associated with whether to support dynamic configuration of model monitoring.

28. The method according to any one of claims 1 to 27, wherein
the first device is a first terminal device, and the second device is a network device or a second terminal device; or
the first device is a first network device, and the second device is a terminal device or a second network device.

29. A method for wireless communication, performed by a second device, the method comprising:
transmitting first information to a first device, wherein the first information is associated with a model monitoring process of a first model.

30. The method according to claim 29, wherein the first information is configuration information associated with the model monitoring process of the first model.

31. The method according to claim 29 or 30, wherein the first information comprises at least one of:
second information, wherein the second information is used to determine the first model;
third information, wherein the third information is constraint information associated with the model monitoring process of the first model;
fourth information, wherein the fourth information is reference signal configuration information associated with the model monitoring process of the first model;
fifth information, wherein the fifth information is association information of a second model, the second model being related to the model monitoring process of the first model;
sixth information, wherein the sixth information is reporting configuration information associated with the model monitoring process of the first model;
seventh information, wherein the seventh information is used to indicate whether to activate a model monitoring task of the first model; or
eighth information, wherein the eighth information is association information of a third model, the third model being not related to the model monitoring process of the first model.

32. The method according to claim 31, wherein the second information indicates at least one of:
a model identifier (ID) of the first model; or
a model deployment location of the first model.

33. The method according to claim 31 or 32, wherein the third information comprises at least one of:
ninth information, wherein the ninth information is used to indicate a resource configuration associated with the model monitoring process of the first model;
tenth information, wherein the tenth information is used to indicate one of a duration corresponding to a single model monitoring and evaluation process of the first model, a minimum duration corresponding to the single model monitoring and evaluation process of the first model, or a duration proportion corresponding to the single model monitoring and evaluation process of the first model;
eleventh information, wherein the eleventh information is used to indicate a quantity of evaluations of the model monitoring task of the first model or a minimum quantity of evaluations of the model monitoring task of the first model;
twelfth information, wherein the twelfth information is used to indicate a time interval between any two adjacent model monitoring and evaluation processes of the first model or a minimum time interval between any two adjacent model monitoring and evaluation processes of the first model;
thirteenth information, wherein the thirteenth information is used to indicate one of a duration corresponding to the model monitoring task of the first model, a minimum duration corresponding to the model monitoring task of the first model, or a duration proportion corresponding to the model monitoring task of the first model; or
fourteenth information, wherein the fourteenth information is used to indicate relevant information of a model monitoring enable event of the first model.

34. The method according to claim 33, wherein the fourteenth information comprises at least one of:
identity information of the model monitoring enable event; or
parameter information associated with the model monitoring enable event.

35. The method according to claim 33 or 34, wherein the model monitoring enable event comprises an event-triggered enable event, wherein the event-triggered enable event is associated with at least one of:
a bit error rate of data transmission;
a packet delay of data transmission;
a throughput of data transmission;
signal quality of a current serving cell of the first device;
signal quality of at least one neighbor cell of a current serving cell of the first device; or
signal quality of at least one cell in a predetermined configuration.

36. The method according to any one of claims 31 to 35, wherein the fourth information comprises at least one of:
reference signal configuration information corresponding to a reference signal received by the first device;
reference signal configuration information corresponding to a reference signal transmitted by the first device; or
indication information on whether to activate a reference signal configuration associated with the model monitoring process of the first model.

37. The method according to any one of claims 31 to 36, wherein the fifth information indicates at least one of:
a model identifier (ID) of the second model;
a model deployment location of the second model;
a first condition under which the second model participates in the model monitoring process of the first model; or
a second condition under which the second model does not participate in the model monitoring process of the first model.

38. The method according to claim 37, wherein the first condition or the second condition is associated with at least one of:
a bit error rate of data transmission;
a packet delay of data transmission;
a throughput of data transmission;
signal quality of a current serving cell of the first device;
signal quality of at least one neighbor cell of a current serving cell of the first device;
signal quality of at least one cell in the predetermined configuration;
a remaining resource of the first device;
whether a configuration with which the second model is currently running belongs to a first configuration; or
whether a scenario where the second model is currently running belongs to a first scenario.

39. The method according to any one of claims 31 to 38, wherein within a model monitoring period of the first model, the second model is suspended from use or the second model is used in a first mode; and beyond the model monitoring period of the first model, the second model is used in a second mode; wherein the first mode is different from the second mode.

40. The method according to any one of claims 31 to 39, wherein the sixth information comprises at least one of:
a report event associated with the model monitoring process of the first model; or
a report data type associated with the model monitoring process of the first model.

41. The method according to claim 40, wherein the report event associated with the model monitoring process comprises an event-triggered report event, wherein the event-triggered report event is associated with at least one of:
an amount of model monitoring data;
a quantity of evaluations of the model monitoring task;
a duration since the first device receives configuration information associated with the model monitoring process last time;
signal quality of a current serving cell of the first device;
signal quality of at least one neighbor cell of a current serving cell of the first device;
signal quality of at least one cell in a predetermined configuration;
a remaining resource of the first device;
performance of the first model;
a type of a current serving cell of the first device; or
a current location of the first device.

42. The method according to claim 38 or 41, wherein the remaining resource of the first device comprises at least one of:
a remaining memory of the first device;
a remaining battery capacity of the first device; or
one of a remaining computing resource of the first device or a remaining processing power resource of the first device.

43. The method according to any one of claims 29 to 42, wherein the first information is configured based on a first granularity, wherein the first granularity corresponds to one of:
a model identifier (ID);
a model ID group; or
a communication device.

44. The method according to any one of claims 29 to 43, wherein the first information is used to perform one of aperiodic model monitoring, semi-periodic model monitoring, or periodic model monitoring on the first model.

45. The method according to any one of claims 29 to 44, further comprising:
transmitting fifteenth information to the first device, wherein the fifteenth information is used to activate or deactivate a model monitoring task of the first model.

46. The method according to claim 45, further comprising:
receiving response information for the fifteenth information from the first device, wherein the response information for the fifteenth information is used to indicate whether a request corresponding to the fifteenth information is accepted or rejected.

47. The method according to claim 45 or 46, wherein in a case where the fifteenth information is used to activate the model monitoring task of the first model, the method further comprises:
performing, by the first device, at least one of:
determining whether a model monitoring enable event of the first device is satisfied;
capturing model monitoring data of the first model;
transmitting and/or receiving a reference signal associated with the model monitoring process of the first model;
determining whether at least one of a first condition or a second condition is satisfied; or
determining whether a report event associated with the model monitoring process of the first model is satisfied;
wherein the first condition is a condition under which a second model participates in the model monitoring process of the first model, the second condition is a condition under which the second model does not participate in the model monitoring process of the first model, and the second model is related to the model monitoring process of the first model.

48. The method according to any one of claims 29 to 47, further comprising:
transmitting sixteenth information to the first device, wherein the sixteenth information is used to activate or deactivate at least one of transmission or reception of a reference signal associated with the model monitoring process of the first model.

49. The method according to any one of claims 29 to 48, further comprising:
receiving seventeenth information from the first device, wherein the seventeenth information indicates a correlation between models.

50. The method according to claim 49, wherein the seventeenth information comprises at least one of:
mutually associated model identifiers (IDs); or
a condition for mutual association between the models.

51. The method according to any one of claims 29 to 50, further comprising:
receiving a model monitoring result from the first device.

52. The method according to claim 51, wherein the model monitoring result comprises at least one of:
a model identifier (ID) of a monitored model;
captured model monitoring data; or
a model monitoring recommendation.

53. The method according to claim 52, wherein the model monitoring recommendation comprises at least one of:
indication information for recommending to stop running the model;
indication information for recommending to switch the model;
a model identifier (ID) of a target model recommended for switching to;
indication information for recommending to re-trigger model monitoring;
indication information for recommending to stopping monitoring the model;
indication information for recommending to modify model monitoring configuration information; or
recommended model monitoring configuration information.

54. The method according to any one of claims 29 to 53, further comprising:
receiving capability information from the first device, wherein the capability information is associated with the model monitoring process of the first model.

55. The method according to claim 54, wherein the capability information comprises at least one of:
capability information about whether to support model monitoring for a plurality of models;
capability information associated with a reference signal;
information of a model for which model monitoring is supported; or
information associated with whether to support dynamic configuration of model monitoring.

56. The method according to any one of claims 29 to 55, wherein
the first device is a first terminal device, and the second device is a network device or a second terminal device; or
the first device is a first network device, and the second device is a terminal device or a second network device.

57. A device for wireless communication, wherein the device is a first device, and the device comprises:
a first receiving unit, configured to receive first information from a second device, wherein the first information is associated with a model monitoring process of a first model.

58. The device according to claim 57, wherein the first information is configuration information associated with the model monitoring process of the first model.

59. The device according to claim 57 or 58, wherein the first information comprises at least one of:
second information, wherein the second information is used to determine the first model;
third information, wherein the third information is constraint information associated with the model monitoring process of the first model;
fourth information, wherein the fourth information is reference signal configuration information associated with the model monitoring process of the first model;
fifth information, wherein the fifth information is association information of a second model, the second model being related to the model monitoring process of the first model;
sixth information, wherein the sixth information is reporting configuration information associated with the model monitoring process of the first model;
seventh information, wherein the seventh information is used to indicate whether to activate a model monitoring task of the first model; or
eighth information, wherein the eighth information is association information of a third model, the third model being not related to the model monitoring process of the first model.

60. The device according to claim 59, wherein the second information indicates at least one of:
a model identifier (ID) of the first model; or
a model deployment location of the first model.

61. The device according to claim 59 or 60, wherein the third information comprises at least one of:
ninth information, wherein the ninth information is used to indicate a resource configuration associated with the model monitoring process of the first model;
tenth information, wherein the tenth information is used to indicate one of a duration corresponding to a single model monitoring and evaluation process of the first model, a minimum duration corresponding to the single model monitoring and evaluation process of the first model, or a duration proportion corresponding to the single model monitoring and evaluation process of the first model;
eleventh information, wherein the eleventh information is used to indicate a quantity of evaluations of the model monitoring task of the first model or a minimum quantity of evaluations of the model monitoring task of the first model;
twelfth information, wherein the twelfth information is used to indicate a time interval between any two adjacent model monitoring and evaluation processes of the first model or a minimum time interval between any two adjacent model monitoring and evaluation processes of the first model;
thirteenth information, wherein the thirteenth information is used to indicate one of a duration corresponding to the model monitoring task of the first model, a minimum duration corresponding to the model monitoring task of the first model, or a duration proportion corresponding to the model monitoring task of the first model; or
fourteenth information, wherein the fourteenth information is used to indicate relevant information of a model monitoring enable event of the first model.

62. The device according to claim 61, wherein the fourteenth information comprises at least one of:
identity information of the model monitoring enable event; or
parameter information associated with the model monitoring enable event.

63. The device according to claim 61 or 62, wherein the model monitoring enable event comprises an event-triggered enable event, wherein the event-triggered enable event is associated with at least one of:
a bit error rate of data transmission;
a packet delay of data transmission;
a throughput of data transmission;
signal quality of a current serving cell of the first device;
signal quality of at least one neighbor cell of a current serving cell of the first device; or
signal quality of at least one cell in a predetermined configuration.

64. The device according to any one of claims 59 to 63, wherein the fourth information comprises at least one of:
reference signal configuration information corresponding to a reference signal received by the first device;
reference signal configuration information corresponding to a reference signal transmitted by the first device; or
indication information on whether to activate a reference signal configuration associated with the model monitoring process of the first model.

65. The device according to any one of claims 59 to 64, wherein the fifth information indicates at least one of:
a model identifier (ID) of the second model;
a model deployment location of the second model;
a first condition under which the second model participates in the model monitoring process of the first model; or
a second condition under which the second model does not participate in the model monitoring process of the first model.

66. The device according to claim 65, wherein the first condition or the second condition is associated with at least one of:
a bit error rate of data transmission;
a packet delay of data transmission;
a throughput of data transmission;
signal quality of a current serving cell of the first device;
signal quality of at least one neighbor cell of a current serving cell of the first device;
signal quality of at least one cell in a predetermined configuration;
a remaining resource of the first device;
whether a configuration with which the second model is currently running belongs to a first configuration; or
whether a scenario where the second model is currently running belongs to a first scenario.

67. The device according to any one of claims 59 to 66, wherein within a model monitoring period of the first model, the second model is suspended from use or the second model is used in a first mode; and beyond the model monitoring period of the first model, the second model is used based on a second mode; wherein the first mode is different from the second mode.

68. The device according to any one of claims 59 to 67, wherein the sixth information comprises at least one of:
a report event associated with the model monitoring process of the first model; or
a report data type associated with the model monitoring process of the first model.

69. The device according to claim 68, wherein the report event associated with the model monitoring process comprises an event-triggered report event, wherein the event-triggered report event is associated with at least one of:
an amount of model monitoring data;
a quantity of evaluations of the model monitoring task;
a duration since the first device receives configuration information associated with the model monitoring process last time;
signal quality of a current serving cell of the first device;
signal quality of at least one neighbor cell of a current serving cell of the first device;
signal quality of at least one cell in a predetermined configuration;
a remaining resource of the first device;
performance of the first model;
a type of a current serving cell of the first device; or
a current location of the first device.

70. The device according to claim 66 or 69, wherein the remaining resource of the first device comprises at least one of:
a remaining memory of the first device;
a remaining power capacity of the first device; or
one of a remaining computing resource of the first device or a remaining processing power resource of the first device.

71. The device according to any one of claims 57 to 70, wherein the first information is configured based on a first granularity, wherein the first granularity corresponds to one of:
a model identifier (ID);
a model ID group; or
a communication device.

72. The device according to any one of claims 57 to 71, wherein the first information is used to perform one of aperiodic model monitoring, semi-periodic model monitoring, or periodic model monitoring on the first model.

73. The device according to any one of claims 57 to 72, further comprising:
a second receiving unit, configured to receive fifteenth information from the second device, wherein the fifteenth information is used to activate or deactivate a model monitoring task of the first model.

74. The device according to claim 73, further comprising:
a first transmitting unit, configured to transmit response information for the fifteenth information to the second device, wherein the response information for the fifteenth information indicates whether a request corresponding to the fifteenth information is accepted or rejected.

75. The device according to claim 73 or 74, wherein in a case where the fifteenth information is used to activate the model monitoring task of the first model, the device further comprises:
an executing unit, configured to perform at least one of:
determining whether a model monitoring enable event of the first device is satisfied;
capturing model monitoring data of the first model;
transmitting and/or receiving a reference signal associated with the model monitoring process of the first model;
determining whether at least one of a first condition or a second condition is satisfied; or
determining whether a report event associated with the model monitoring process of the first model is satisfied;
wherein the first condition is a condition under which a second model participates in the model monitoring process of the first model, the second condition is a condition under which the second model does not participate in the model monitoring process of the first model, and the second model is related to the model monitoring process of the first model.

76. The device according to any one of claims 57 to 75, further comprising:
a third receiving unit, configured to receive sixteenth information from the second device, wherein the sixteenth information is used to activate or deactivate at least one of transmission or reception of a reference signal associated with the model monitoring process of the first model.

77. The device according to any one of claims 57 to 76, further comprising:
a second transmitting unit, configured to transmit seventeenth information to the second device, wherein the seventeenth information indicates a correlation between models.

78. The device according to claim 77, wherein the seventeenth information comprises at least one of:
mutually associated model identifiers (IDs); or
a condition for mutual association between the models.

79. The device according to any one of claims 57 to 78, further comprising:
a third transmitting unit, configured to transmit a model monitoring result to the second device.

80. The device according to claim 79, wherein the model monitoring result comprises at least one of:
a model identifier (ID) of a monitored model;
captured model monitoring data; or
a model monitoring recommendation.

81. The device according to claim 80, wherein the model monitoring recommendation comprises at least one of:
indication information for recommending to stop running the model;
indication information for recommending to switch the model;
a model identifier (ID) of a target model recommended for switching to;
indication information for recommending to re-trigger model monitoring;
indication information for recommending to stopping monitoring the model;
indication information for recommending to modify model monitoring configuration information; or
recommended model monitoring configuration information.

82. The device according to any one of claims 57 to 81, further comprising:
a fourth transmitting unit, configured to transmit capability information to the second device, wherein the capability information is associated with the model monitoring process of the first model.

83. The device according to claim 82, wherein the capability information comprises at least one of:
capability information about whether to support model monitoring for a plurality of models;
capability information associated with a reference signal;
information of a model for which model monitoring is supported; or
information associated with whether to support dynamic configuration of model monitoring.

84. The device according to any one of claims 57 to 83, wherein
the first device is a first terminal device, and the second device is a network device or a second terminal device; or
the first device is a first network device, and the second device is a terminal device or a second network device.

85. A device for wireless communication, wherein the device is a second device, and the device comprises:
a first transmitting unit, configured to transmit first information to a first device, wherein the first information is associated with a model monitoring process of a first model.

86. The device according to claim 85, wherein the first information is configuration information associated with the model monitoring process of the first model.

87. The device according to claim 85 or 86, wherein the first information comprises at least one of:
second information, wherein the second information is used to determine the first model;
third information, wherein the third information is constraint information associated with the model monitoring process of the first model;
fourth information, wherein the fourth information is reference signal configuration information associated with the model monitoring process of the first model;
fifth information, wherein the fifth information is association information of a second model, the second model being related to the model monitoring process of the first model;
sixth information, wherein the sixth information is reporting configuration information associated with the model monitoring process of the first model;
seventh information, wherein the seventh information is used to indicate whether to activate a model monitoring task of the first model; or
eighth information, wherein the eighth information is association information of a third model, the third model being not related to the model monitoring process of the first model.

88. The device according to claim 87, wherein the second information indicates at least one of:
a model identifier (ID) of the first model; or
a model deployment location of the first model.

89. The device according to claim 87 or 88, wherein the third information comprises at least one of:
ninth information, wherein the ninth information is used to indicate a resource configuration associated with the model monitoring process of the first model;
tenth information, wherein the tenth information is used to indicate one of a duration corresponding to a single model monitoring and evaluation process of the first model, a minimum duration corresponding to the single model monitoring and evaluation process of the first model, or a duration proportion corresponding to the single model monitoring and evaluation process of the first model;
eleventh information, wherein the eleventh information is used to indicate a quantity of evaluations of the model monitoring task of the first model or a minimum quantity of evaluations of the model monitoring task of the first model;
twelfth information, wherein the twelfth information is used to indicate a time interval between any two adjacent model monitoring and evaluation processes of the first model or a minimum time interval between any two adjacent model monitoring and evaluation processes of the first model;
thirteenth information, wherein the thirteenth information is used to indicate one of a duration corresponding to the model monitoring task of the first model, a minimum duration corresponding to the model monitoring task of the first model, or a duration proportion corresponding to the model monitoring task of the first model; or
fourteenth information, wherein the fourteenth information is used to indicate relevant information of a model monitoring enable event of the first model.

90. The device according to claim 89, wherein the fourteenth information comprises at least one of:
identity information of the model monitoring enable event; or
parameter information associated with the model monitoring enable event.

91. The device according to claim 89 or 90, wherein the model monitoring enable event comprises an event-triggered enable event, wherein the event-triggered enable event is associated with at least one of:
a bit error rate of data transmission;
a packet delay of data transmission;
a throughput of data transmission;
signal quality of a current serving cell of the first device;
signal quality of at least one neighbor cell of a current serving cell of the first device; or
signal quality of at least one cell in a predetermined configuration.

92. The device according to any one of claims 87 to 91, wherein the fourth information comprises at least one of:
reference signal configuration information corresponding to a reference signal received by the first device;
reference signal configuration information corresponding to a reference signal transmitted by the first device; or
indication information on whether to activate a reference signal configuration associated with the model monitoring process of the first model.

93. The device according to any one of claims 87 to 92, wherein the fifth information indicates at least one of:
a model identifier (ID) of the second model;
a model deployment location of the second model;
a first condition under which the second model participates in the model monitoring process of the first model; or
a second condition under which the second model does not participate in the model monitoring process of the first model.

94. The device according to claim 93, wherein the first condition or the second condition is associated with at least one of:
a bit error rate of data transmission;
a packet delay of data transmission;
a throughput of data transmission;
signal quality of a current serving cell of the first device;
signal quality of at least one neighbor cell of a current serving cell of the first device;
signal quality of at least one cell in the predetermined configuration;
a remaining resource of the first device;
whether a configuration with which the second model is currently running belongs to a first configuration; or
whether a scenario where the second model is currently running belongs to a first scenario.

95. The device according to any one of claims 87 to 94, wherein within a model monitoring period of the first model, the second model is suspended from use or the second model is used in a first mode; and beyond the model monitoring period of the first model, the second model is used in a second mode; wherein the first mode is different from the second mode.

96. The device according to any one of claims 87 to 95, wherein the sixth information comprises at least one of:
a report event associated with the model monitoring process of the first model; or
a report data type associated with the model monitoring process of the first model.

97. The device according to claim 96, wherein the report event associated with the model monitoring process comprises an event-triggered report event, wherein the event-triggered report event is associated with at least one of:
an amount of model monitoring data;
a quantity of evaluations of the model monitoring task;
a duration since the first device receives configuration information associated with the model monitoring process last time;
signal quality of a current serving cell of the first device;
signal quality of at least one neighbor cell of a current serving cell of the first device;
signal quality of at least one cell in a predetermined configuration;
a remaining resource of the first device;
performance of the first model;
a type of a current serving cell of the first device; or
a current location of the first device.

98. The device according to claim 94 or 97, wherein the remaining resource of the first device comprises at least one of:
a remaining memory of the first device;
a remaining battery capacity of the first device; or
one of a remaining computing resource of the first device or a remaining processing power resource of the first device.

99. The device according to any one of claims 85 to 98, wherein the first information is configured based on a first granularity, wherein the first granularity corresponds to one of:
a model identifier (ID);
a model ID group; or
a communication device.

100. The device according to any one of claims 85 to 99, wherein the first information is configured to perform one of aperiodic model monitoring, semi-periodic model monitoring, or periodic model monitoring on the first model.

101. The device according to any one of claims 85 to 100, further comprising:
a second transmitting unit, configured to transmit fifteenth information to the first device, wherein the fifteenth information is used to activate or deactivate a model monitoring task of the first model.

102. The device according to claim 101, further comprising:
a first receiving unit, configured to receive response information for the fifteenth information from the first device, wherein the response information for the fifteenth information is used to indicate whether a request corresponding to the fifteenth information is accepted or rejected.

103. The device according to claim 101 or 102, wherein in a case where the fifteenth information is used to activate the model monitoring task of the first model, the first device is configured to perform at least one of:
determining whether a model monitoring enable event of the first device is satisfied;
capturing model monitoring data of the first model;
transmitting and/or receiving a reference signal associated with the model monitoring process of the first model;
determining whether at least one of a first condition or a second condition is satisfied; or
determining whether a report event associated with the model monitoring process of the first model is satisfied;
wherein the first condition is a condition under which a second model participates in the model monitoring process of the first model, the second condition is a condition under which the second model does not participate in the model monitoring process of the first model, and the second model is related to the model monitoring process of the first model.

104. The device according to any one of claims 85 to 103, further comprising:
a third transmitting unit, configured to transmit sixteenth information to the first device, wherein the sixteenth information is used to activate or deactivate at least one of transmission or reception of a reference signal associated with the model monitoring process of the first model.

105. The device according to any one of claims 85 to 104, further comprising:
a second receiving unit, configured to receive seventeenth information from the first device, wherein the seventeenth information is used to indicate a correlation between models.

106. The device according to claim 105, wherein the seventeenth information comprises at least one of:
mutually associated model identifiers (IDs); or
a condition for mutual association between the models.

107. The device according to any one of claims 85 to 106, further comprising:
a third receiving unit, configured to receive a model monitoring result from the first device.

108. The device according to claim 107, wherein the model monitoring result comprises at least one of:
a model identifier (ID) of a monitored model;
captured model monitoring data; or
a model monitoring recommendation.

109. The device according to claim 108, wherein the model monitoring recommendation comprises at least one of:
indication information for recommending to stop running the model;
indication information for recommending to switch the model;
a model identifier (ID) of a target model recommended for switching to;
indication information for recommending to re-trigger model monitoring;
indication information for recommending to stopping monitoring the model;
indication information for recommending to modify model monitoring configuration information; or
recommended model monitoring configuration information.

110. The device according to any one of claims 85 to 109, further comprising:
a fourth receiving unit, configured to receive capability information from the first device, wherein the capability information is associated with the model monitoring process of the first model.

111. The device according to claim 110, wherein the capability information comprises at least one of:
capability information about whether to support model monitoring for a plurality of models;
capability information associated with a reference signal;
information of a model for which model monitoring is supported; or
information associated with whether to support dynamic configuration of model monitoring.

112. The device according to any one of claims 85 to 111, wherein
the first device is a first terminal device, and the second device is a network device or a second terminal device; or
the first device is a first network device, and the second device is a terminal device or a second network device.

113. A device for wireless communication, comprising: a transceiver, a memory, and a processor, wherein the memory is configured to store a program, and the processor is configured to invoke the program in the memory and control the transceiver to receive or transmit a signal, such that the device performs the method for wireless communication as defined in any one of claims 1 to 28 or claims 29 to 56.

114. An apparatus, comprising: a processor configured to invoke a program in a memory, wherein the apparatus performs the method for wireless communication as defined in any one of claims 1 to 28 or claims 29 to 56.

115. A chip, comprising: a processor configured to invoke a program in a memory, wherein a device equipped with the chip performs the method for wireless communication as defined in any one of claims 1 to 28 or claims 29 to 56.

116. A computer-readable storage medium, wherein the computer-readable storage medium is configured to store a program, and the program causes a computer to perform the method for wireless communication as defined in any one of claims 1 to 28 or claims 29 to 56.

117. A computer program product, comprising a program, wherein the program causes a computer to perform the method for wireless communication as defined in any one of claims 1 to 28 or claims 29 to 56.

118. A computer program, wherein the computer program causes a computer to perform the method for wireless communication as defined in any one of claims 1 to 28 or claims 29 to 56.
